# EUROPÄISCHE PATENTSCHRIFT

(11) **EP 1 844 111 B1**
(45) Veröffentlichungstag und Bekanntmachung des Hinweises auf die Patenterteilung: **29.10.2008**
(21) Anmeldenummer: 06704245.7
(22) Anmeldetag: 24.01.2006
(51) Int. Cl.: C09D 5/08, C09D 133/00, C23F 11/12

(54) **ZUBEREITUNG UND VERFAHREN ZUM AUFBRINGEN VON KORROSIONSSCHUTZSCHICHTEN**
PREPARATION AND METHOD FOR APPLYING CORROSION PROTECTION LAYERS
PREPARATION ET PROCEDE POUR APPLIQUER DES COUCHES ANTICORROSION

(30) Priorität: 28.01.2005 DE 102005004292; 20.12.2005 DE 102005061318
(43) Veröffentlichungstag der Anmeldung: 17.10.2007
(73) Patentinhaber: BASF SE, 67056 Ludwigshafen (DE)
(72) Erfinder: GÖTHLICH, Alexander, 68163 Mannheim (DE); VANDERMEULEN, Guido, 68549 Ilvesheim (DE); ROSCHMANN, Konrad, 67069 Ludwigshafen-edigheim (DE); FISCHER, Gerhard, 67246 Dirmstein (DE); WITTELER, Helmut, 67157 Wachenheim (DE); FERNANDEZ GONZALEZ, Monica, 67227 Frankenthal (DE)
(86) Internationale Anmeldenummer: PCT/EP2006/050416
(87) Internationale Veröffentlichungsnummer: WO 2006/079629

(56) Entgegenhaltungen:
- WO-A-99/29790
- US-A1- 2004 024 135

## Beschreibung

Die vorliegende Erfindung betrifft eine Zubereitung und ein Verfahren zum Aufbringen von Korrosionsschutzschichten auf metallische Oberflächen, insbesondere die Oberflächen von metallischen Bauwerken oder Metallkonstruktionen, wobei die Zubereitung, mindestens ein unter atmosphärischen Bedingungen härtbares Bindemittelsystem, ein Dicarbonsäure-Olefin-Copolymeres sowie einen feinteiligen Füllstoff, ein Pigment oder einen Farbstoff umfasst. Sie betrifft weiterhin eine durch das Verfahren erhältliche, beschichtete metallische Oberfläche.

Metallische Gegenstände, Bauteile, Bauwerke oder Metallkonstruktionen aus üblichen metallischen Werkstoffen müssen im Regelfalle vor Korrosion geschützt werden. Eine wesentliche Rolle im Korrosionsschutz nehmen hierbei Beschichtungen ein, mit denen die metallische Oberfläche vor dem Einfluss korrosiver Medien abgeschirmt wird. Geeignete Beschichtungssysteme zum Korrosionsschutz enthalten üblicherweise eines oder mehrere Bindemittel, Korrosionsschutzpigmente, gegebenenfalls organische Korrosionsinhibitoren sowie weitere Zusatzstoffe und Additive.

Korrosionsschutzbeschichtungen können bei flächigen metallischen Werkstücken wie beispielsweise Blechen oder Metallbändern oder auch bei ausgeformten, aber mobilen metallischen Werkstücken, wie beispielsweise Automobilkarosserien oder Karosserieteilen, auf industriellen Anlagen aufgebracht werden. Die Trockung und Härtung wird üblicherweise bei höheren Temperaturen, beispielsweise in geeigneten Öfen vorgenommen, oder sie kann auch photochemisch unter Verwendung geeigneter Strahlungsquellen vorgenommen werden.

Bei immobilen metallischen Konstruktionen wie beispielsweise Gebäuden, Brücken, Strommasten, Öltanks, Pipelines, Kraftwerken oder chemischen Anlagen können die Korrosionsschutzbeschichtungen naturgemäß nicht wie beschrieben aufgebracht werden, sondern werden üblicherweise an Ort und Stelle aufgestrichen oder aufgespritzt. Die Trocknung und Härtung derartiger Korrosionsschutzbeschichtungen erfolgt unter atmosphärischen Bedingungen also bei Umgebungstemperatur sowie in Gegenwart von Luft und üblicher Luftfeuchtigkeit.

Der erforderliche Korrosionsschutz von Oberflächen richtet sich nach der örtlich herrschenden Korrosionsbelastung. Je nach dem erforderlichen Schutzgrad wird der Korrosionsschutz von Oberflächen durch Korrosionsschutzanstriche auch als leichter, mittlerer und schwerer Korrosionsschutz bezeichnet. Schwerer Korrosionsschutz muss auch bei starken Korrosionsbelastungen, wie z.B. Industrieatmosphäre, feuchter und/oder salzhaltiger Atmosphäre, ausreichenden Schutz bieten.

Bei schweren Korrosionsbelastungen ist es daher üblich, eine Grund-, eine Zwischen- und eine Deckbeschichtung auf die metallische Oberfläche aufzubringen. Die Grundbeschichtung umfasst Korrosionsschutzmittel und/oder Korrosionsschutzpigmente und trägt somit entscheidend zur Korrosionsschutzfunktion bei. Sie sorgt weiterhin für eine ausreichende Haftung zwischen der metallischen Oberfläche nachfolgenden Beschichtungen. Die Zwischenbeschichtung wirkt vor allem als Barriereschicht. Sie kann zu diesem Zwecke beispielsweise blättchenförmige Pigmente umfassen. Die Deckbeschichtung soll voll allem den Anstrichaufbau vor Umwelteinflüssen wie Regen, Feuchtigkeit, UV-Licht, Luftverunreinigungen, Chemikalien, Staub oder Vogelkot schützen, und sie dient natürlich dekorativen Zwecken. Typische empfohlene Schichtdicken von Korrosionsschutzanstrichen liegen je nach Art des Anstriches zwischen 15 und 500 µm.

Das Aufbringen von drei Schichten bringt bei jeder notwendigen Erneuerung eines Korrosionsschutzanstriches nicht nur erheblichen Aufwand für das Entfernen des Altanstriches und das Auftragen des neuen Anstriches mit sich, sondern kann zusätzlich zur Folge haben, dass Anlagen oder Gebäude während der Sanierung nicht genutzt werden können.

Eines der wirksamsten Korrosionsschutzpigmente für Korrosionsschutzanstriche ist Zinkchromat. Der Markt verlangt aus ökologischen Gründen jedoch zunehmend chromfreie, insbesondere Chrom(VI)-freie Korrosionsschutzanstriche. Typische Ersatzstoffe wie beispielsweise Zinkphosphate weisen aber in der Regel eine geringere Wirksamkeit als Zinkchromat auf.

Es besteht folglich Bedarf an einem chromfreien, effektiveren Korrosionsschutz, mit dem der Zeitpunkt, bis zu dem eine Nachbehandlung der Oberfläche erforderlich ist, herausgeschoben werden kann. Weiterhin ist es wünschenswert, Beschichtungssysteme zur Verfügung zu stellen, bei denen die Anzahl der erforderlichen Anstriche vermindert werden kann, so dass zumindest nur eine Grund- und eine Deckbeschichtung für einen guten Korrosionsschutz erforderlich ist, oder sogar nur eine einzige Schicht, die die Funktion aller drei Schichten zusammen übernimmt.

Bindemittel zur Herstellung von Lacken für Korrosionschutzanstriche sind prinzipiell bekannt.

EP-A 157 133 offenbart eine Bindemittelzusammensetzung für wässrige Korrosionsschutzanstriche, welche eine wässrige Dispersion von Poly(meth)acrylat-Copolymeren sowie Zinkkomplexsalze von polymeren Polycarbonsäuren umfasst. Die Formulierungen könenn auch Korrosionsinhibitoren sowie Korrosionsschutzpigmente umfassen. Polymere Korrosionsinhibitoren sind nicht offenbart.

WO 99/46337 offenbart eine wässrige Polymerdispersion, beispielsweise aus Alkyl-(meth)acrylaten, Vinylestern oder Vinylaromaten, in Verbindunge mit einem Phosphatgruppen aufweisenden Emulgator sowie deren Verwendung als Bindemittel für Anstrichfarben oder Korrosionsschutzlacke. Polymere Korrosionsinhibitoren sind nicht offenbart.

Die Verwendung verschiedener Olefin-Maleinsäure-Copolymere als Korrosionsschutzmittel ist prinzipiell bekannt.

Müller et al. offenbaren in "Corrosion Science, 2000, 42, 577-584" sowie "Die Angewandte Makromolekulare Chemie 1994, 221,177-185" die Verwendung von Styrol-Maleinsäure-Copolymeren als Korrosionsschutzmittel für Zink- bzw. Aluminiumpigmente.

EP-A 122 229, CA 990 060, JP 60-24384 sowie JP-A 2004-68065 offenbaren die Verwendung von Copolymeren aus Maleinsäure sowie verschiedenen anderen Monomeren wie Styrol, anderen Olefinen und/oder anderen Vinylmonomeren als Korrosionsschutzmittel in wässrigen Systemen.

EP-A 244 584 offenbaret die Verwendung von Copolymere aus modifizierten Maleinsäureeinheiten und Styrol, sulfoniertem Styrol, Alkylvinylether, C₂- bis C₆-Olefinen sowie (Meth)acrylamid als Zusatz zu Kühlwasser. Die modifizierten Maleinsäureeinheiten weisen über Spacer angebrachte funktionelle Gruppen wie beispielsweise -OH, -OR, -PO₃H₂, -OPO₃H₂, -COOH oder bevorzugt -SO₃H auf.

JP-A 2004-204243 und JP-A 2004-204244 offenbaren Stahlbleche mit verbesserter Lötbarkeit, welche zunächst mit Zinn, dann mit Zink und danach mit einer wässrigen Formulierung zur Verbesserung der Lötbarkeit nachbehandelt werden. Die wässrige Formulierung umfasst 100 bis 800 g/l wasserbasierten Acrylatharzes, 50 bis 600 g/l wasserlösliche Kolophoniumharze, 10 bis 100 g/l eines Korrosionsschutzmittels sowie 1 bis 100 g/l Antioxidatien. In einer alternativen Ausführungsform der Erfindung enthält die Formulierung 100 - 900 g/l eines wasserbasierten Polyurethanharzes, 10 bis 100 g/l eines Korrosionsschutzmittels sowie 1 bis 100 g/l Antioxidantien. Als Korrosionsschutzmittel können Amine eingesetzt werden, sowie Styrol-Maleinsäureanhydrid-Copolymere. Bevorzugt wird ein Polymer eingesetzt, welches ein Maleinsäure-Halbester-Ammoniumsalz als Polymereinheit umfasst. Die Formulierungen enthalten keine Füllstoffe bzw. Pigmente. Die Schichten werden bei 90°C getrocknet. Die Dicke der Beschichtung beträgt jeweils 0,05 bis 10 µm. JP-A 2004-218050 sowie JP-2004-218051 offenbaren entsprechende Formulierungen sowie damit beschichtete Stahlbleche, wobei die Formulierungen hierbei zusätzlich noch wasserdispergierbares SiO₂ umfassen.

JP-A 60-219 267 offenbart eine strahlungshärtbare Lackformulierung, welche 5 bis 40 % eines Copolymers aus Styrol sowie ungesättigten Dicarbonsäuren bzw. deren Halbestern, 5 bis 30 % Phenolharze sowie 30 bis 90 % monomere Acrylate umfasst. Mittels des Lackes sind alkalisch entfernbare Rostschutzfilme mit einer Dicke von 5 bis 50 µm erhältlich.

EP-A 1 288 232 und EP-A 1 288 338 offenbaren Copolymere aus modifizierten Maleinsäureeinheiten und anderen Monomeren wie beispielsweise. Acrylaten, Vinylethern oder Olefinen. Bei den modifizierten Maleinsäureeinheiten handelt es sich um N-substituierte Maleinsäureamide und/oder -imide. Bei den N-Substituenten handelt es sich um über Spacer angebundene heterocyclische Verbindungen. Die Schriften offenbaren die Verwendung derartiger Polymere als Korrosionsschutzmittel in wässrigen Systemen, wie beispielsweise Kühlwasserkreisläufen sowie als Bestandteil für wässrige Korrosionsschutzbeschichtungen. Sie können für Korrosionsschutzbeschichtungen mit üblichen Lackbestandteilen formuliert werden.

WO 99/29790 offenbart Verbindungen, welche Heterocyclen mit mindestens zwei sekundären Stickstoffatomen umfassen. Diese werden als Vernetzer zum Aushärten von Epoxy-Lacken bei Temperaturen unterhalb von 40°C eingesetzt. Die Schrift erwähnt Korrosionsschutzbeschichtungen für Baustahl mit einer Schichtdicke von 112 bis 284 µm. Bei den Stickstoffverbindungen kann es sich auch um Copolymere aus N-substituierten Maleinimideinheiten und Styrol oder 1-Octen handeln. Die Maleinimideinheiten sind mit einer über einen Spacer angebundene Piperazineinheit substituiert.

US 6,090,894 offenbart OH-funktionalisierte Copolymere sowie deren Verwendung zur Herstellung von Lacken zur Beschichtung von Metallen oder Kunststoffen. Die OH-funktionellen Copolymere werden durch polymeranaloge Umsetzung von Epoxyverbindungen mit COOH-gruppenhaltigen Copolymeren aus Maleinsäuremono- oder Diestern und α-Olefin-Carbonsäuren sowie gegebenenfalls weiteren Monomeren erhalten. Bei den Maleinsäuremono- oder diestern handelt es sich um Ester mit monofunktionellen Alkoholen, insbesondere Methanol oder Ethanol. Bei Epoxyverbindungen kann es sich beispielsweise um Glycidylverbindungen, Ethylenoxid oder bevorzugt Propylenoxid handeln.

Aufgabe der Erfindung war es, ein verbessertes Verfahren zum Aufbringen von Korrosionsschutzbeschichtungen bereitzustellen, welches sich durch längere Standzeiten der Beschichtungen auszeichnet. Weiterhin sollte die Anzahl der aufzubringenden Korrosionsschutzschichten verringert werden können. Bevorzugt sollte es sich um ein chromfreies Verfahren handeln.

Dementsprechend wurde eine Zubereitung zum Aufbringen von Korrosionsschutzschichten auf metallische Oberflächen gefunden, welche mindestens die folgenden Komponenten umfasst:
(A) 15 bis 70 Gew. % mindestens eines unter atmosphärischen Bedingungen härtbaren Bindemittelsystems (A),
(B) 0,1 bis 40 Gew. % mindestens eines polymeren Korrosionsschutzmittels,
(C) 5 bis 83,9 Gew. % mindestens eines Lösemittels,
(D) 1 bis 70 Gew. % mindestens einer Komponente (D) ausgewählt aus der Gruppe von feinteiligen Füllstoffen, Pigmenten oder Farbstoffen,
   wobei die Mengen jeweils auf die Gesamtmenge aller Komponenten der Formulierung bezogen sind, und wobei es sich bei dem Korrosionsschutzmittel um mindestens ein Copolymer (B) handelt, welches aus den folgenden monomeren Baueinheiten aufgebaut ist:
   (b1) 70 bis 30 mol % mindestens eines monoethylenisch ungesättigten Kohlenwasserstoffs (b1a) und/oder mindestens eines Monomers (b1b) ausgewählt aus der Gruppe von mit funktionellen Gruppen X¹ modifizierten monoethylenisch ungesättigten Kohlenwasserstoffen (b1b') und Vinylethern (b1b"),
   (b2) 30 bis 70 mol % mindestens einer monoethylenisch ungesättigten Dicarbonsäure mit 4 bis 8 C-Atomen und/oder ihres Anhydrids (b2a) und/oder Derivaten (b2b) davon,
      wobei es sich bei den Derivaten (b2b) um Ester der Dicarbonsäuren mit Alkoholen der allgemeinen Formel HO-R¹-X²ₙ (I) und/oder Amide bzw. Imide mit Ammoniak und/oder Aminen der allgemeinen Formel HR²N-R¹-X²ₙ (II) handelt, und die Abkürzungen die folgende Bedeutung haben:
      R¹: (n+1)-wertige Kohlenwasserstoffgruppe mit 1 bis 40 C-Atomen, bei der nicht benachbarte C-Atome auch durch O und/oder N substituiert sein können,
      R²: H, C₁- bis C₁₀-Kohlenwasserstoffgruppe oder -(R¹-X²ₙ)
      n: 1,2 oder 3
      X²: eine funktionelle Gruppe, sowie
   (b3) 0 bis 10 mol % anderer ethylenisch ungesättigter Monomere, die von (b1) und (b2) verschieden, aber mit (b1) und (b2) copolymerisierbar sind,
      wobei die Mengen jeweils auf die Gesamtmenge aller Monomereinheiten im Copolymer bezogen sind.

In einem zweiten Aspekt der Erfindung wurde ein Verfahren zum Korrosionsschutz gefunden, bei dem man mindestens eine Korrosionsschutzschicht mit einer Dicke von mindestens 15 µm auf eine metallische Oberfläche aufbringt, und das Verfahren mindestens die folgenden Verfahrensschritte umfasst:
(1) Aufbringen einer unter atmosphärischen Bedingungen härtbaren Zubereitung auf die blanke oder vorbeschichtete metallische Oberfläche, sowie
(2) Härten der aufgebrachten Schicht unter atmosphärischen Bedingungen.

In einem dritten Aspekt der Erfindung wurde eine nach dem Verfahren erhältliche beschichtete Oberfläche gefunden.

### Zu der Erfindung ist im Einzelnen das Folgende auszuführen:

Mithilfe des erfindungsgemäßen Verfahrens können im Prinzip alle Arten von Metallen beschichtet werden. Bevorzugt handelt es sich aber um unedle Metalle oder Legierungen, welche üblicherweise als metallische Konstruktionswerkstoffe eingesetzt werden, und die vor Korrosion geschützt werden müssen.

Insbesondere handelt es sich um die Oberflächen von Eisen, Stahl, Zink, Zinklegierungen, Aluminium oder Aluminiumlegierungen. Stahl kann die Üblichen, dem Fachmann bekannten Legierungskomponenten enthalten. Es kann sich dabei um die Oberflächen von vollständig aus den besagten Metallen bzw. Legierungen bestehenden Körpern handeln. Es kann sich aber auch um die Oberflächen von mit Zn, Zn-Legierungen, Al oder AI-Legierungen beschichteten Körpern handeln, wobei die Körper aus anderen Materialien, beispielsweise aus anderen Metallen, Legierungen, Polymeren oder Verbundwerkstoffen bestehen kann. In einer bevorzugten Ausführungsform der Erfindung handelt es sich um Stahloberflächen oder verzinkte und/oder aluminierte Stahloberflächen.

Zink- oder Aluminiumlegierungen sind dem Fachmann bekannt. Typische Bestandteile von Zink-Legierungen umfassen insbesondere Al, Pb, Si, Mg, Sn, Cu oder Cd. Typische Bestandteile von Aluminium-Legierungen umfassen insbesondere Mg, Mn, Si, Zn, Cr, Zr, Cu oder Ti. Der Begriff "Zinklegierung" soll auch Al/Zn-Legierungen einschließen, bei denen AI- und Zn in annähernd gleicher Menge vorhanden sind. Je nach dem gewünschten Anwendungszweck wählt der Fachmann Art und Menge von Legierungsbestandteilen aus. Zn- oder Aluminiumbeschichtungen können auf Stahl beispielsweise durch Schmelztauchverfahren, z.B. Feuerverzinken, oder durch Sherardisieren aufgebracht werden. Sofern das Bauteil immobil ist oder die Bauteilgeometrie es nicht zulässt, können entsprechende Schichten auch mittels thermischem Spritzen (Spritzverzinken, Spritzaluminieren) aufgebracht werden.

Mittels des erfindungsgemäßen Verfahrens können insbesondere metallische Oberflächen vor Korrosion geschützt werden, die während des Gebrauchs in Kontakt mit atmosphärischer Luft stehen, es kann sich aber auch um Oberflächen handeln, die während des Gebrauchs in Kontakt mit Wasser, Erdreich oder anderen korrosiven Medien stehen.

Bei den metallischen Oberflächen, die mittels des erfindungsgemäßen Verfahrens vor Korrosion geschützt werden sollen kann es sich prinzipiell um beliebige Oberflächen handeln. Bevorzugt handelt es sich aber um die Oberflächen von metallischen Bauwerken oder Metallkonstruktionen bzw. den dazu benötigten Bauteilen. Metallkonstruktionen bzw. Bauwerke werden üblicherweise aus Baustahl, wie Stahlträgern, Stahlrohren oder Stahlblechen durch Nieten, Schweißen oder Schrauben zu entsprechenden Konstruktionen verbunden. Beispiele umfassen Brücken, Strommasten, Tanks, Container, chemische Anlagen, Gebäude, Dächer, Rohre, Kupplungen, Flansche, Schiffe, Kräne, Pfähle oder Spundwände.

Besonders bevorzugt kann das erfindungsgemäße Verfahren zum Schutz von metallischen Oberflächen eingesetzt werden, welche einer Korrosionsbelastung der Korrosivitätskategorien C2 (gemäß DIN EN ISO 12944) oder höher ausgesetzt sind, bevorzugt Korrosivitätskategorien C3 oder höher und besonders bevorzugt Korrosivitätskategorien C4 oder höher.

Dabei werden die Korrosivitätskategorien gemäß DIN EN ISO 12944 durch den flächenbezogenen Massenverlust bzw. die Dickenabnahme von unlegiertem Stahl bzw. bei Zink definiert, deren Oberflächen 1 Jahr lang einer bestimmten korrosiven Belastung ausgesetzt sind.

| | | |
|---|---|---|
| C2 (gering korrosiv): | unlegierter Stahl: | Massenverlust > 10 - 200 g/m² |
| | | Dickenabnahme > 1,3 - 25 µm |
| | Zink: | Massenverlust > 0,7 - 5 g/m² |
| | | Dickenabnahme > 0,1 -0,7 µm |
| | | |
| C3 (mäßig korrosiv): | unlegierter Stahl: | Massenverlust > 200 -400 g/m² |
| | | Dickenabnahme > 25 - 50 µm |
| | Zink: | Massenverlust > 5 -15 g/m² |
| | | Dickenabnahme > 0,7 - 2,1 µm |
| | | |
| C4 (stark korrosiv): | unlegierter Stahl: | Massenverlust > 400 - 650 g/m² |
| | | Dickenabnahme > 50 - 80 µm |
| | Zink: | Massenverlust > 15 - 30 g/m² |
| | | Dickenabnahme > 2,1 -4,2 µm |
| C5-I/M (sehr stark): | unlegierter Stahl: | Massenverlust > 650 -1500 g/m² |
| | | Dickenabnahme > 80 - 200 µm |
| | Zink: | Massenveriust > 30 - 60 g/m² |
| | | Dickenabnahme > 4,2 - 8,4 µm |

Bei dem erfindungsgemäßen Verfahren handelt es sich bevorzugt um ein chrom(VI)freies Verfahren, besonders bevorzugt um ein chromfreies Verfahren. Der Begriff "chrom(VI)frei" bzw. "chromfrei" im Sinne dieser Erfindung bedeutet, dass die eingesetzte Zubereitung selbst keine Chrom(VI)-Verbindungen bzw. überhaupt keine Chromverbindungen enthält, und dass auch keine korrosionshemmende Vorbehandlung der Metalloberfläche mit Chrom(VI)-Verbindungen bzw. Chromverbindungen durchgeführt wird. Dies schließt selbstverständlich nicht aus, dass sich -an sich unbeabsichtigt-Spuren von Chrom in der Schicht befinden können. Hierbei kann es sich beispielsweise um Chromspuren handeln, die im Zuge der Beschichtung eines chromhaltigen Stahles aus dem Stahl herausgelöst werden.

Zur Ausführung des erfindungsgemäßen Verfahrens zum Korrosionsschutz wird erfindungsgemäß eine Zubereitung eingesetzt, welche mindestens ein unter atmosphärischen Bedingungen härtbares Bindemittelsystem (A), mindestens ein polymeres Korrosionsschutzmittel (B), mindestens ein Lösemittel (C) sowie mindestens einen feinteiligen Füllstoff und/oder Pigment (D) umfasst.

### Bindemittel (A)

Bei den unter atmosphärischen Bedingungen härtbaren Bindemittelsystemen (A) kann es sich um die auf dem Gebiet der Korrosionsschutzanstriche und Beschichtungen üblichen Bindemittelsysteme handeln. Derartige Bindemittel bzw. Bindemittelsysteme sind dem Fachmann prinzipiell bekannt. Selbstverständlich können auch Mischungen verschiedener Bindemittelsysteme eingesetzt werden, vorausgesetzt es treten durch die Mischung keine unerwünschten Effekte auf.

Der Begriff "Bindemittelsystem" bezeichnet im Folgenden in prinzipiell bekannter Art und Weise diejenigen Anteile der Formulierung, die für die Filmbildung verantwortlich sind.

Der Begriff "unter atmosphärischen Bedingungen härtbar" bedeutet, dass die Bindemittelsysteme die Eigenschaft aufweisen, nach dem Aufbringen auf die Oberfläche unter üblichen Umgebungsbedingungen, d.h. etwa bei Raumtemperatur, in Gegenwart von Luft sowie üblicher Luftfeuchtigkeit ohne die Verwendung zusätzlicher Apparaturen oder Einrichtungen auszuhärten. Typische Härtungstemperaturen betragen je nach der Umgebung mehr als 0 bis 40°C, bevorzugt 5 bis 35°C und beispielsweise 15 bis 25°C.

Es ist für den Fachmann klar, dass die Zeit bis zum vollständigen Härten ein und desselben Bindemittelsystems je nach den tatsächlich herrschenden Umgebungsbedingungen unterschiedlich sein kann.

Je nach der Art des eingesetzten Bindemittelsystems kann die Härtung nach verschiedenen Mechanismen verlaufen. Beispielsweise kann es sich um eine rein physikalische Härtung, verursacht durch das Verdunsten des verwendeten Lösemittels handeln. Es kann sich weiterhin um eine oxidative Härtung durch Reaktion des Bindemittelsystems mit dem Sauerstoff der Luft handeln. Schließlich kann es sich auch um eine chemische Vernetzung (Reaktiwernetzung) handeln. Reaktive Bindemittelsysteme umfassen vernetzbare Komponenten. Die vernetzbaren Komponenten können niedermolekular, oligomer oder polymer sein. Es kann sich hierbei bevorzugt um 1 K- oder auch um 2 K-Systeme handeln. Reaktiv vernetzende Systeme umfassen auch feuchtigkeitshärtende Bindemittelsysteme, bei denen die Luftfeuchtigkeit als Härterkomponente fungiert. Selbstverständlich kann ein Bindemittelsystem auch durch eine Kombination verschiedener Härtungsverfahren aushärten. Bei 2-K-Systemen werden die Binder und die Härterkomponente in prinzipiell bekannter Art und Weise vor dem Verwenden der Formulierung gemischt.

Zur Ausführung der Erfindung können wässrig lösliche oder organisch lösliche Bindemittelsysteme eingesetzt werden. Bevorzugt handelt es sich um Bindemittelsysteme auf wässriger Basis.

Bindemittelsysteme für Korrosionsschutzbeschichtungen, insbesondere Korrosionsschutzsysteme auf wässriger Basis sind dem Fachmann prinzipiell bekannt. Es kann sich beispielsweise um Epoxyharze, Polyacrylate, Styrol-Acrylat-Polymere, Polyester, Alkydharze, Polyurethane der Styrol-Butadien-Polymere handeln.

Die Menge der Bindemittel (A) in der Formulierung beträgt 15 bis 70 Gew. %, bezogen auf die Menge aller Komponenten der Formulierung einschließlich des Lösemittels. Sie wird vom Fachmann je nach den gewünschten Eigenschaften der Beschichtung festgelegt. Bevorzugt beträgt die Menge 20 bis 60 Gew. % und besonders bevorzugt 25 bis 50 Gew. %.

Bevorzugte Bindemittelsysteme zur Ausführung der Erfindungen sind nachfolgend beschrieben.

### Polyacrylate bzw. Styrol-Acrylat-Copolymere (A1)

In einer bevorzugten Ausführungsform der Erfindung handelt es sich bei dem Bindemittelsystem um eine wässrige oder überwiegend wässrige Dispersion von Polyacrylaten bzw. Styrol-Acrylat-Copolymeren (A1).

Wässrige Dispersionen von Polyacrylaten bzw. Styrol-Acrylat-Copolymeren (A1) zur Herstellung von Korrosionsschutzanstrichen sind dem Fachmann prinzipiell bekannt. Bei den wässrigen Dispersionen der Polyacrylate (A1) kann es sich sowohl um Primär dispersionen wie um Sekundärdispersionen handeln. Geeignete Polyacrylate enthalten als Hauptmonomere mindestens ein Alkyl(meth)acrylat wie beispielsweise Methyl-(meth)acrylat, Ethyl(meth)acrylat, Butyl(meth)acrylat oder 2-Ethylhexyl(meth)acrylat.
Sie können bevorzugt als weitere Hauptmonomere Vinylaromaten, insbesondere Styrol aufweisen. Die Menge der Hauptmonomeren zusammen beträgt in der Regel mindestens 60 Gew. %, bevorzugt mindestens 80 Gew. %. Styrol-Acrylat-Copolymere umfassen neben den genannten Alkyl(meth)acrylaten als Hauptmonomer in der Regel mindestens 30 Gew. %, bevorzugt mindestens 40 Gew. % und besonders bevorzugt etwa 50 Gew. % Styrol. Die Polyacrylate bzw. Styrol-Acrylat-Copolymere (A1) können daneben noch weitere Comonomere aufweisen, insbesondere solche mit funktionellen Gruppen wie Hydroxy-, Carboxy- oder Carboxamidgeruppen. Beispiele umfassen (Meth)acrylsäure, Itaconsäure, Maleinsäure, Fumarsäure, (Meth)acrylamid oder Hydroxyalkyl(meth)acrylate. Bevorzugt handelt es sich bei weiteren Comonomeren um saure Comonomere. Weiterhin können optional auch noch vemetzenende Monomere in geringen Mengen, üblicherweise weniger als 4 Gew. %, bevorzugt weniger als 2 Gew. %, anwesend sein. Beispiele umfassen Butandiol(meth)acrylat, Hexandioldi(meth)acrylat oder Allylacrylat.

Polyacrylate (A1) können in prinzipiell bekannter Art und Weise mittels Emulsionspolymerisation hergestellt werden. Weitere Einzelheiten zu deratigen Polymeren sowie deren Herstellung sind beispielsweise in EP-A 157 133, WO 99/46337, oder in "Paints and Coatings, 2.5. Acrylic Coatings" in Ullmann's Encyclopedia of Technical Chemistry, 6th Edition 2000, Electronic Release offenbart. Der Fachmann trifft unter den prinzipiell möglichen Polyacrylaten (A1) je nach den gewünschten Eigenschaften der Schicht eine geeignete Auswahl.

Zur Ausführung der Erfindung insbesondere geeignet sind Styrol-Acrylat-Copolymere, welche als Hauptmonomere mindestens ein elastomeres Acrylat wie beispielsweise n-Butyl(meth)acrylat, n-Hexyl(meth)acrylat, n-Octylacrylat oder 2-Ethylhexyl(meth)acrylat im Gemisch mit Styrol sowie als Nebenmonomer mindestens ein saures Monomer, wie beispielsweise (Meth)acrylsäure umfassen. Zur Verwendung als Bindemittel für die Formulierung können die Säuregruppen ganz oder teilweise mit geeigneten Basen wie beispielsweise Ammoniak neutralisiert werden.

Die eingesetzten Polyacrylate sollten in der Regel eine Glasübergangstemperatur T_{g} im Bereich von 0 bis 60°C, bevorzugt im Bereich von 5 bis 40°C aufweisen (gemessen nach der DSC-Methode nach DIN EN ISO 11357). Die Glasübergangstemperatur kann vom Fachmann in prinzipiell bekannter Art und Weise durch die Auswahl und das mengenverhältnis von Hart- und Weichmonomeren gewählt werden.

Bevorzugt zur Ausführung der Erfindung können weiterhin Polyacrylate (A1) mit einer mittleren Teilchengröße von 50 nm bis 400 nm, besonders bevorzugt 80 nm bis 250 nm eingesetzt werden (gemessen mit dem Malvern® Autosizer 2 C).

Geeignete Acrylat- bzw. Styrol-Acrylat-Dispersionen zur Herstellung von Korrosionsschutzanstrichen sind kommerziell erhältlich, beispielsweise als Acronal® S 760 oder Acronal® LR 8977 (Fa. BASF Aktiengesellschaft) oder Acronal® Optive 410 (Fa. BASF Corporation).

### Styrol-Alkadien-Polymere (A2)

In einer zweiten, bevorzugten Ausführungsform der Erfindung handelt es sich bei dem Bindemittelsystem um eine wässrige oder überwiegend wässrige Dispersion von Styrol-Alkadien-Polymeren (A2).

Wässrige Dispersionen von Styrol-Alkadien-Polymeren (A2) zur Herstellung von Korrosionsschutzanstrichen sind dem Fachmann prinzipiell bekannt und beispielsweise in EP-A 47380 beschrieben. Es kann es bevorzugt um Primärdispersionen aber auch um Sekundärdispersionen handeln.

Geeignete Polymere (A2) umfassen als Hauptmonomere Styrol sowie mindestens ein konjugiertes aliphatisches Dien (Alkadien). Bei den Alkadienen kann es sich beispielsweise um Butadien, Isopren, 1,3-Pentadien oder Dimethylbutadien handeln. Das Styrol kann auch noch mit Alkylgruppen substituiert sein. Beispiele umfassen α-Methylstyrol oder 4-Methylstyrol. Bevorzugt handelt es sich bei den Hauptmonomeren um Styrol und Butadien. In der Regel enthalten die Polymere zumindest 20 Gew. % Styrol und 20 Gew. % Alkadiene, wobei die Menge der Hauptmonomere zusammen in der Regel mindestens 60 Gew. %, bevorzugt mindestens 80 Gew. % beträgt. Die Mengenangaben beziehen sich jeweils auf die Summe aller Monomere. Sie können darüber hinaus noch weitere Comonomere aufweisen. Zu nennen sind hier einerseits ethylenisch ungesättige Carbonsäuren und/oder Discarbonsäuren wie beispielsweise (Meth)acrylsäure, Maleinsäure oder Itaconsäure. Weiterhin kann es sich um ethylenisch ungesättigte Carbonsäurenitrile wie (Meth)acrylnitril sowie Alkyl(meth)acrylate wie Methyl-(meth)acrylat, n-Butyl(meth)acrylat, n-Hexyl(meth)acrylat, n-Octylacrylat oder 2-Ethylhexyl(meth)acrylat handeln.

Styrol-Alkadien-Polymere (A2) können in prinzipiell bekannter Art und Weise mittels Emulsionspolymerisation hergestellt werden. Weitere Einzelheiten zu Styrol-Butadien-Polymeren für Beschichtungsstoffe sowie deren Herstellung sind beispielsweise in "Paints and Coatings, 2.4.8. Polystyrene and Styrene Copolymers" in Ullmann's Encyclopedia of Technical Chemistry, 6th Edition 2000, Electronic Release offenbart.

Zur Ausführung der Erfindung insbesondere geeignet sind Styrol-Butadien-Polymere, welche als Nebenmonomer ein oder mehrere saure Monomere, wie beispielsweise (Meth)acrylsäure umfassen, bevorzugt in einer Menge von 0,5 bis 5 Gew. %. Zur Verwendung als Bindemittel für die Formulierung können die Säuregruppen bevorzugt ganz oder teilweise mit geeigneten Basen wie beispielsweise Ammoniak neutralisiert werden.

Die eingesetzten Styrol-Butadien-Polymere (A2) sollten in der Regel eine Glasübergangstemperatur T_{g} im Bereich von 0 bis 60°C, bevorzugt im Bereich von 5 bis 40°C aufweisen. Die Glasübergangstemperatur kann vom Fachmann in prinzipiell bekannter Art und Weise durch die Auswahl und das Mengenverhältnis von Hart- und Weichmonomeren gewählt werden.

Bevorzugt zur Ausführung der Erfindung können weiterhin Styrol-Butadien-Polymere (A2) mit einer mittleren Teilchengröße von 50 nm bis 400 nm, besonders bevorzugt 80 nm bis 250 nm eingesetzt werden (wie oben gemessen).

### Polyurethane (A3)

In einer dritten, bevorzugten Ausführungsform der Erfindung handelt es sich bei dem Bindemittelsystem um eine wässrige oder überwiegend wässrige Dispersion von Polyurethanen (A3).

Wässrige Dispersionen von Polyurethanen (A3) zur Herstellung von Korrosionsschutzanstrichen sind dem Fachmann prinzipiell bekannt. Einzelheiten zu Polyurethanen für Beschichtungsstoffe sowie deren Herstellung sind beispielsweise in "Paints and Coatings, 2.9 Polyurethane Coatings in "Ullmann's Encyclopedia of Technical Chemistry, 6th Edition 2000, Electronic Release offenbart. Bei den wässrigen Dispersionen der Polyurethanen (A3) kann es sich sowohl um Primärdispersionen wie um Sekundärdispersionen handeln.

Polyurethane für wässrige Dispersionen können in prinzipiell bekannter Art und Weise aus üblichen Diisocyanaten sowie Diolen aufgebaut werden. Im Hinblick auf gute Filmbildung und Elastizität kommen hierzu insbesondere Diole mit einem zahlenmittleren Molekulargewicht Mₙ von etwa 500 bis 5000 g/mol, bevorzugt etwa 1000 bis 3000 g/mol in Frage. Hierzu können sowohl Polyether- wie Polyesterdiole eingesetzt werden. Die Menge derartiger Diole mit höherem Molekulargewicht beträgt üblicherweise 10 bis 100 mol % bezüglich der Summe aller Diole. Die gewünschte Härte und Elastizität des Films lässt sich steuern, indem man neben dem bereits genannten Diol noch niedermolekulare Diole mit einem zahlenmittleren Molekulargewicht Mₙ von etwa 60 bis 500 g/mol einsetzt.

Zum Aufbau von Polyurethanen für wässrige Dispersionen werden darüber hinaus Monomere eingesetzt, welche wenigstens eine Isocyanatgruppe oder eine gegenüber Isocyanatgruppen reaktive Gruppe sowie zusätzlich mindestens eine hydrophile Gruppe umfassen. Hierbei kann es sich um nichtionische Gruppen wie beispielsweise Polyoxyethylengruppen, um saure Gruppen wie COOH-, Sulfonat- oder Phosphonatgruppen oder um basische Gruppen wie Aminogruppen handeln. Bevorzugt handelt es sich um saure Gruppen. Zur Verwendung als Bindemittel für die Formulierung können die Säuregruppen bevorzugt ganz oder teilweise mit geeigneten Basen neutralisiert werden. Bevorzugt hierzu sind Ammoniak oder Amine. Weitere Einzelheiten zu derartigen Polyurethandispersionen sowie deren Herstellung sind in WO 2005/005565, Seite 4, Zeile 13 bis Seite 14, Zeile 14 ausführlich beschrieben. Weitere Beispiele geeigneter Polyurethane sind in US 5,707,941 oder in WO 2004/101638, insbesondere Seite 2, Zeile 31 bis Seite14, Zeile 11 offenbart.

Es kann sich auch um modifizierte Polyurethane handeln. Beispielsweise kann es sich um oxidativ härtende Urethanalkyde handeln. Zur Herstellung können beispielsweise Triglyceride ungesättigter Fettsäuren teilweise hydrolysiert werden. Die entstehende OH-Gruppe kann bei der Polyurethanherstellung mit den Isocyanatgruppen reagieren.

Bevorzugt zur Ausführung der Erfindung können weiterhin Polyurethane (A3) mit einer mittleren Teilchengröße von nicht mehr als 1000 nm, bevorzugt weniger als 500, besonders bevorzugt weniger als 200 nm, und insbesondere 20 bis 200 nm eingesetzt werden.

### Alkydharze (A4)

In einer vierten, bevorzugten Ausführungsform der Erfindung handelt es sich bei dem Bindemittelsystem um eine wässrige oder überwiegend wässrige Dispersion von Alkydharzen (A4).

Wässrige Dispersionen von Alkydharzen (A4) zur Herstellung von Korrosionsschutzanstrichen sind dem Fachmann prinzipiell bekannt. Bei Alkydharzen (A4) handelt es sich um oxidativ härtende Polykondensationsharze aus Polyolen und mehrwertigen Carbonsäuren, bei denen mindestens eine OH-Gruppe des Polyols mit fetten Ölen und/oder natürlichen und/oder synthetischen einfach oder mehrfach ungesättigten Fettsäuren verestert ist, wobei mindestens eines der eingesetzten Polyole tri- oder höherfunktionellsein muss.

Beispiele bevorzugter mehrwertiger Alkohole umfassen Glycerin, Pentaerythrit, Trimethylolethan, Trimethylolpropan, verschiedene Diole wie Ethan-/Propandiol, Diethylenglykol, Neopentylglykol.

Bevorzugte mehrwertige Carbonsäuren sind Phthalsäure(anhydrid) (PSA), Isophthalsäure, Terephthalsäure, Trimellitsäureanhydrid, Adipinsäure, Azelainsäure, Sebacinsäure, besonders bevorzugt ist Phthalsäure(anhydrid).

Als Ölkomponente bzw. Fettsäure kommen beispielsweise trocknende Öle, wie Leinöl, Oiticicaöl oder Holzöl, halbtrocknende Öle, wie Sojaöl, Sonnenblumenöl, Safloröl, Ricinenöl oder Tallöl, nicht-trocknende Öle, wie Ricinusöl, Kokosöl oder Erdnußöl oder freie Fettsäuren obiger Öle in Betracht.

Die Molmasse Mₙ typischer Alkydharze liegt zwischen 1500 und 20000 g/mol, bevorzugt zwischen 3500 und 6000 g/mol. Die Säurezahl beträgt bevorzugt 2 bis 30 mg KOH/g, bei wasserverdünnbaren Harzen auch 35-65 mg KOH/g. Die OH-Zahl beträgt in der Regel bis zu 300, bevorzugt bis zu 100 mg KOH/g.

Der Begriff "Alkydharze" soll auch modifizierte Alkydharze wie styrolmodifizierte Alkydharze, Urethanalkyde, Urethanöle oder epoxyharzmodifizierte Alkydharze umfassen. Derartige modifizierte Alkydharze sind dem Fachmann bekannt.

Weitere Einzelheiten zu Alkydharzen (A4) für Beschichtungsstoffe sowie deren Herstellung sind beispielsweise in "Paints and Coatings, 2.6. Alkyd Coatings" in Ullmann's Encyclopedia of Technical Chemistry, 6th Edition 2000, Electronic Release sowie in "Lackformulierung und Lackrezeptur", Hrsg. Ulrich Zorll, S. 188 ff, Curt R. Vinzentz Verl., Hannover, 2003 offenbart.

Die eingesetzten Alkydharze (A4) sollten in der Regel eine Glasübergangstemperatur T_{g} im Bereich von 0 bis 60°C, bevorzugt von 5 bis 40°C aufweisen.

### Copolymer (B)

Erfindungsgemäß umfasst die Zusammensetzung als Korrosionsschutzmittel weiterhin mindestens ein Copolymer (B). Das Copolymer ist aus den Monomeren (b1) und (b2) sowie optional Monomer (b3) aufgebaut, wobei selbstverständlich jeweils mehrere verschiedene Monomere (b1) bzw. (b2) bzw. (b3) eingesetzt werden können. Außer (b1), (b2) und ggf. (b3) sind keine weiteren Monomere vorhanden.

### Monomere (b1)

Als Monomer (b1) werden 70 bis 30 mol.% mindestens eines monoethylenisch ungesättigten Kohlenwasserstoffs (b1a) und/oder mindestens eines Monomers (b1b) ausgewählt aus der Gruppe von mit funktionellen Gruppen X¹ modifizierten monoethylenisch ungesättigten Kohlenwasserstoffen (b1b') sowie monoethylenisch ungesättigten Ethern (b1b") eingesetzt. Die Mengenangabe bezieht sich auf die Gesamtmenge aller Monomereinheiten im Copolymer.

### (b1a)

Bei den Monomeren (b1a) kann es sich prinzipiell um alle Kohlenwasserstoffe handeln, die eine ethylenisch ungesättigte Gruppe aufweisen. Es kann sich um geradkettige oder verzweigte aliphatische Kohlenwasserstoffe (Alkene) und/oder alicyclische Kohlenwasserstoffe (Cycloalkene) handeln. Es kann sich auch um Kohlenwasserstoffe handeln, die neben der ethylenisch ungesättigten Gruppe aromatische Reste aufweisen, insbesondere um vinylaromatische Verbindungen. Bevorzugt handelt es sich um ethylenisch ungesättigte Kohlenwasserstoffe, bei denen die Doppelbindung in α-Stellung angeordnet ist. Im Regelfalle sollten zumindest 80% der eingesetzten Monomere (b1a) die Doppelbindung in α-Stellung aufweisen.

Der Begriff "Kohlenwasserstoffe" soll auch Oligomere des Propens oder unverzweigter oder bevorzugt verzweigter C₄- bis C₁₀-Olefine umfassen, welche eine ethylenisch ungesättigte Gruppe aufwesien. In der Regel weisen eingesetzte Oligomere ein zahlenmittleres Molekulargewicht Mₙ von nicht mehr als 2300 g/mol auf. Bevorzugt beträgt Mₙ 300 bis 1300 g/mol und besonders bevorzugt 400 bis 1200 g/mol. Bevorzugt sind Oligomere aus Isobuten, welche optional noch mit weitere C₃- bis C₁₀-Olefine als Comononer umfassen können. Derartige Oligomere auf Basis von Isobuten sollen im Folgenden dem allgemeinen Brauch folgend als "Polyisobuten" bezeichnet werden. Eingesetzte Polyisobutene sollten bevorzugt einen Gehalt an Doppelbindungen in α-Stellung von mindestens 70 %, besonders bevorzugt mindestens 80 % aufweisen. Derartige Polyisobutene -auch als reaktive Polyisobutene bezeichnet- sind dem Fachmann bekannnt und kommerziell erhältlich.

Zubereitung gemäß Anspruch 1 oder 2, dadurch gekennzeichnet, dass das Copolymer (B) mindestens ein Monomer des Typs (b1a) umfasst.

Zubereitung gemäß einem der Ansprüche 1 bis 3, dadurch gekennzeichnet, dass es sich bei den Monomeren (b1a) um monoethylenisch ungesättigte Kohlenwasserstoffe mit 9 bis 27 C-Atomen handelt.

Abgesehen von den genannten Oligomeren eignen sich zur Ausführung der vorliegenden Erfindung als (b1a) insbesondere monoethylenisch ungesättigte Kohlenwasserstoffe mit 6 bis 30 C-Atomen. Beispiele derartiger Kohlenwasserstoffe umfassen Hexen, Hepten, Octen, Nonen, Decen, Undecen, Dodecen, Tetradecen, Hexadecen, Octadecen, Eicosan, Docosan, Diisobuten, Triisobuten oder Styrol.

Bevorzugt werden monoethylenisch ungesättigte Kohlenwasserstoffe mit 9 bis 27, besonders bevorzugt 12 bis 24 C-Atomen und beispielsweise 18 bis 24 C-Atomen eingesetzt. Selbstverständlich können auch Gemische verschiedener Kohlenwasserstoffe eingesetzt werden. Hierbei kann es sich auch um technische Gemische verschiedener Kohlenwasserstoffe handeln, beispielsweise technische C₂₀₋₂₄-Gemische.

Als Monomer (b1a) werden besonders bevorzugt Alkene, bevorzugt 1-Alkene mit den bereits genannten Anzahlen von C-Atomen eingesetzt. Die Alkene sind bevorzugt linear oder zumindest im Wesentlichen linear. "Im Wesentlichen linear" soll bedeuten, dass es sich bei eventuellen Seitengruppen nur um Methyl- oder Ethylgruppen, bevorzugt nur um Methylgruppen handelt.

Weiterhin besonders geeignet sind die genannten Oligomere, bevorzugt Polyisobutene. Überraschenderweise kann hierdurch gerade die Verarbeitbarkeit in wässrigen Systemen verbessert werden. Die Oligomere werden aber bevorzugt nicht als einziges Monomer eingesetzt, sondern im Gemisch mit anderen Monomeren (b1a). Es hat sich bewährt, einen Oligomerengehalt von 60 mol % bezüglich der Summer aller Monomere (b1) nicht zu überschreiten. Falls vorhanden, beträgt der Gehalt an Oligomeren in der Regel 1 bis 60 mol %, bevorzugt 10 bis 55 und besonders bevorzugt 20 bis 50 mol % und beispielsweise ca. 20 mol %. Zur Kombination mit Polyisobutenen eignen sich insbesondere Olefine mit 12 bis 24 C-Atomen.

### (b1b')

Bei den mit funktionellen Gruppen X¹ modifizierten monoethylenisch ungesättigten Kohlenwasserstoffen (b1b') kann es sich prinzipiell um alle Kohlenwasserstoffe handeln, die eine ethylenisch ungesättigte Gruppe aufweisen, und bei denen eines oder mehrere H-Atome des Kohlenwasserstoffes durch funktionelle Gruppen X¹ substituiert sind.

Es kann sich um Alkene, Cycloalkene oder aromatische Reste aufweisende Alkene handeln. Bevorzugt handelt es sich um ethylenisch ungesättigte Kohlenwasserstoffe, bei denen die Doppelbindung in α-Stellung angeordnet ist. In der Regel weisen die Monomere (b1b') 3 bis 30 C-Atome, bevorzugt 6 bis 24 C-Atome und besonders bevorzugt 8 bis 18 C-Atome auf. Sie weisen bevorzugt eine funktionelle Gruppe X¹ auf. Bevorzugt handelt es sich bei den Monomeren (b1b') um lineare oder im Wesentlichen lineare α-ungesättigte-ω-funktionalisierte Alkene mit 3 bis 30, bevorzugt 6 bis 24 und besonders bevorzugt 8 bis 18 C-Atomen und/oder um 4-substituiertes Styrol.

Mit den funktionellen Gruppen X¹ kann vorteilhaft die Löslichkeit des Copolymers (B) in der Formulierung sowie die Verankerung an der Metalloberfläche bzw. in der Bindemittelmatrix beeinflusst werden. Der Fachmann trifft je nach der Natur des Bindemittelsystems und der metallischen Oberfläche eine geeignete Auswahl an funktionellen Gruppen. Bei den funktionellen Gruppen handelt es sich bevorzugt um mindestens eine ausgewählt aus der Gruppe von -Si(OR³)₃ (mit R³ = C₁- bis C₆-Alkyl), -OR⁴, -SR⁴, -NR⁴₂, -NH(C=O)R⁴, COOR⁴, -(C=O)R⁴, -COCH₂COOR⁴, -(C=NR⁴)R⁴, -(C=N-NR⁴₂)R⁴, -(C=N-NR⁴-(C=O)-NR⁴₂)R⁴, -(C=N-OR⁴)R⁴, -O-(C=O)NR⁴, -NR⁴(C=O)NR⁴₂, -NR⁴(C=NR⁴)NR⁴, -CSNR⁴₂, - CN, -PO₂R⁴₂, -PO₃R⁴₂, -OPO₃R⁴₂, (mit R⁴ = unabhängig voneinander H, C₁ bis C₆-Alkyl, Aryl, (Erd)Alkalisalz) oder -SO₃H handeln.

Bevorzugt handelt es sich bei den Gruppen X¹ um Si(OR³)₃ (mit R³ = C₁- bis C₆-Alkyl), -OR⁴, -NR⁴₂, -NH(C=O)R⁴, COOR⁴, -CSNR⁴₂, - CN, -PO₂R⁴₂, -PO₃R⁴₂, -OPO₃R⁴₂, (mit R⁴ = unabhängig voneinander H, C₁ bis C₆-Alkyl, Aryl, (Erd)Alkalisalz) oder -SO₃H. Besonders bevorzugt handelt es sich um -COOH.

Beispiele von geeigneten Monomeren (b1b') umfassen C₄- bis C₂₀-(α,ω)-Ethenylcarbonsäuren, wie beispielsweise Vinylessigsäure oder 10-Undecencarbonsäure, C₂- bis C₂₀-(α,ω)-Ethenylphosphonsäuren wie beispielsweise Vinylphosphonsäure, ihre Mono- oder Diester oder Salze, C₃- bis C₂₀-Ethenylcarbonsäurenitrile wie Acrylnitril, Allylnitril, 1-Butennitril, 2-Methyl-3-butennitril, 2-Methyl-2-butennitril, 1-, 2-, 3- oder 4-Pentennitil oder 1-Hexennitril, 4-substituierte Styrole wie 4-Hydroxystyrol oder 4-Carboxystyrol. Selbstverständlich können auch Gemische mehrerer verschiedener Monomere (b1b') eingesetzt werden. Bevorzugt handelt es sich bei (b1b') um 10-Undecencarbonsäure.

### (b1b")

Bei den Vinylethern (b1b") handelt es sich in prinzipiell bekannter Art und Weise um Ether der allgemeinen Formel H₂C=CH-O-R⁶, wobei R⁶ für eine geradkettige, verzweigte oder cyclische, bevorzugt aliphatische Kohlenwasserstoffgruppe mit 1 bis 30 C-Atomen, bevorzugt mit 2 bis 20 C-Atomen und besonders bevorzugt 6 bis 18 C-Atomen steht. Es kann sich auch um modifizierte Vinylether handeln, bei denen denen eines oder mehrere H-Atome in der Gruppe R⁶ durch funktionelle Gruppen X¹ substituiert sind, wobei X¹ wie oben definiert ist. Bevorzugt handelt es sich bei R⁶ um eine lineare oder im Wesentlichen lineare Gruppe, wobei optional vorhandene funktionelle Gruppen X¹ bevorzugt terminal angeordnet ist. Selbstverständlich können auch mehrere verschiedene Vinylether (b1b") eingesetzt werden.

Beispiele geeigneter Monomere (b1b") umfassen 1,4-Dimethylolcyclohexanmonovinylether, Ethylenglycolmonovinylether, Diethylenglycolmonovinylether, Hydroxybutylvinylether, Methylvinylether, Ethylvinylether, Butylvinylether, Cyclohexylvinylether, Dodecylvinylether, Octadecylvinylether oder t-Butylvinylether.

Zur Herstellung der erfindungsgemäß verwendeten Copolymere (C) können nur die Monomere (b1a) oder nur die Monomere (b1b) oder auch ein Gemisch von Monomeren (b1a) und (b1b) eingesetzt werden. Bevorzugt handelt es sich nur um Monomere (b1a) oder um ein Gemisch aus (b1a) und (b1b). Falls es sich um ein Gemisch aus (b1a) und (b1b) handelt, ist ein Gemisch aus (b1a) und (b1b') bevorzugt. Falls ein Gemisch vorliegt beträgt die Menge der Monomere (b1b) in der Regel 0,1 bis 60 mol % bezüglich der Summe aller Monomerer (b1), bevorzugt 1 bis 50 mol % und besonders bevorzugt 5 bis 30 mol%.

### Monomere (b2)

Als Monomere (b2) werden erfindungsgemäß 30 bis 70 mol % mindestens einer monoethylenisch ungesättigten Dicarbonsäure mit 4 bis 8 C-Atomen bzw. deren Anhydride (b2a) und/oder Derivaten (b2b) davon eingesetzt. Die Mengenangabe bezieht sich auf die Gesamtmenge aller Monomereinheiten im Copolymer (B).

### (b2a)

Beispiele monoethylenisch ungesättigter Dicarbonsäuren (b2a) umfassen Maleinsäure, Fumarsäure, Citraconsäure, Mesaconsäure, Itaconsäure, Methylenmalonsäure oder 4-cyclohexen-1,2-dicarbonsäure. Bei den Monomeren kann es sich auch um Salze der Dicarbonsäuren sowie -sofern möglich- um cyclische Anhydride davon handeln. Bevorzugt als Monomer (b1a) sind Maleinsäure bzw. Maleinsäureanhydrid.

### (b2b)

Bei den Derivaten (b2b) der monoethylenisch ungesättigten Dicarbonsäuren handelt es sich um Ester der Dicarbonsäuren mit Alkoholen der allgemeinen Formel HO-R¹-X²ₙ (I) und/oder Amiden bzw. Imiden mit Ammoniak und/oder Aminen der allgemeinen Formel-HR²N-R¹-X²ₙ (II). Bevorzugt handelt es sich jeweils um 1,ω-funktionelle Alkohole bzw. Amine.

Hierbei handelt es sich bei X² um eine beliebige funktionelle Gruppe. Auch mit den funktionellen Gruppen X² kann vorteilhaft die Löslichkeit des Copolymers (B) in der Formulierung sowie die Verankerung an der Metalloberfläche bzw. in der Bindemittelmatrix beeinflusst werden. Der Fachmann trifft je nach der Natur des Bindemittelsystems und der metallischen Oberfläche eine geeignete Auswahl an funktionellen Gruppen. Es kann sich beispielsweise um saure Gruppen oder von sauren Gruppen abgeleitete Gruppen handeln. Insbesondere kann es sich bei der funktionellen Gruppe um eine ausgewählt aus der Gruppe von -Si(OR³)₃ (mit R³ = C₁- bis C₆-Alkyl), OR⁴, -SR⁴, -NR⁴₂, -NH(C=O)R⁴, COOR⁴, -(C=O)R⁴,' -COCH₂COOR⁴, -(C=NR⁴)R⁴, -(C=N-NR⁴₂)R⁴, -(C=N-NR⁴-(C=O)-NR⁴₂)R⁴, -(C=N-OR⁴)R⁴, -O-(C=O)NR⁴, -NR⁴(C=O)NR⁴₂, -NR⁴(C=NR⁴)NR⁴, -CSNR⁴₂, - CN, -PO₂R⁴₂, -PO₃R⁴₂, -OPO₃R⁴₂, (mit R⁴ = unabhängig voneinander H, C₁ bis C₆-Alkyl, Aryl, (Erd)Alkalisalz) oder -SO₃H handeln. Bevorzugt handelt es sich um -SH, -CSNH₂, -CN, -PO₃H₂ oder -Si(OR³)₃ beziehungsweise deren Salze und ganz besonders bevorzugt sind -CN und -CSNH₂.

Die Zahl n der funktionellen Gruppen X² in (I) bzw. (II) beträgt in der Regel 1, 2 oder 3, bevorzugt 1 oder 2 und besonders bevorzugt (I).

In den Formeln (I) und (II) handelt es sich bei R¹ um eine (n+1)-wertige Kohlenwasserstoffgruppe mit 1 bis 40 C-Atomen, welche die OH-Gruppe bzw. die NHR²-Gruppe mit der oder den funktionellen Gruppen X² verbinden. In der Gruppe können nicht benachbarte C-Atome auch durch O und/oder N substituiert sein. Bevorzugt handelt es sich hierbei um eine 1,ω-funktionelle Gruppe.

In den obigen Formeln (I) und (II) steht R² für H, eine C₁- bis C₁₀-Kohlenwasserstoffgruppe, bevorzugt eine C₁- bis C₆-Alkylgruppe oder für eine Gruppe -R¹-X²ₙ, wobei R¹ und X²ₙ wie oben definiert sind. Bevorzugt steht R² für H oder Methyl und besonders bevorzugt für H.

Bei zweiwertigen verknüpfenden Gruppen R¹ kann es sich um bevorzugt lineare 1, ω-Alkylenreste mit 1 bis 20, bevorzugt 2 bis 6 C-Atomen handeln. Besonders bevorzugt handelt es sich um 1,2-Ethylen-, 1,3-Propylen-, 1,4-Butylen- , 1,5-Pentylen- oder 1,6-Hexylenreste. Weiterhin bevorzugt kann es sich um O-Atome aufweisende Gruppen handeln, beispielsweise um -CH₂-CH₂-O-CH₂-CH₂- oder Polyalkoxygruppen der allgemeinen Formel -CH₂-CHR⁷-[-O-CH₂-CHR⁷-]ₘ-, wobei m für eine natürliche Zahl von 2 bis 13 und R⁷ für H oder Methyl steht. Beispiele für Verbindungen (I) bzw. (II) mit derartigen verknüpfenden Gruppen R¹ umfassen HO-CH₂-CH₂-CSNH₂, HO-CH₂-CH₂-SH, H₂N-CH₂-CH₂-CH₂-Si(OCH₃)₃, H₂N-(-CH₂-)₆-CN, H₂N-CH₂-CH₂-OH oder H₂N-CH₂-CH₂-O-CH₂-CH₂-OH.

Falls der Rest mehrere funktionelle Gruppen binden soll, können prinzipiell mehrere funktionelle Gruppen an das terminale C-Atom gebunden werden. Bevorzugt weist aber R¹ in diesem Falle eine oder mehrere Verzweigungen auf. Bei der Verzweigung kann es sich um ein C-Atom oder bevorzugt um ein N-Atom handeln. Beispiele für Verbindungen (II) mit einem derartigen Rest sind (Hydroxyethyl)aminobismethylenphophonsäure (IIa) oder (Aminoethyl) aminobismethylenphophonsäure (IIb).

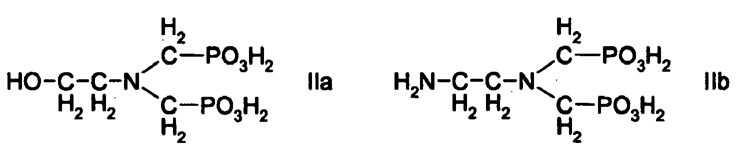

Bei den Derivaten (b2b) der Dicarbonsäuren können jeweils beide COOH-Gruppen der Dicarbonsäure mit den Verbindungen (I) und/oder (II) verestert bzw. amidiert sein. Bevorzugt ist aber jeweils nur eine der beiden COOH-Gruppen verestert bzw. amidiert.

Ein Imid kann sich naturgemäß nur mit 2 COOH-Gruppen gemeinsam bilden. Hierbei handelt es sich bevorzugt um zwei benachbarte COOH-Gruppen; selbstverständlich kann es sich aber auch um nicht benachbarte COOH-Gruppen handeln.

### Monomere (b3)

Die erfindungsgemäß verwendeten Copolymere (B) können darüber hinaus noch 0 bis 10 mol %, bevorzugt 0 bis 5 mol %, besonders bevorzugt 0 bis 3 mol % anderer ethylenisch ungesättigter Monomere, die von (b1) und (b2) verschieden, aber mit (b1) und (b2) copolymerisierbar sind, als Baueinheiten enthalten. Derartige Monomere können falls erforderlich- zu Feinjustierung der Eigenschaften des Copolymers eingesetzt werden. Ganz besonders bevorzugt sind keine. Monomere (b3) enthalten.

Beispiele für Monomere (b3) umfassen insbesondere (Meth)acrylverbindungen wie (Meth)acrylsäure oder (Meth)acrylester oder Kohlenwasserstoffe mit konjugierten Doppelbindungen wie Butadien oder Isopren. Die (Meth)acrylester können auch noch weitere funktionelle Gruppen, wie beispielsweise OH- oder COOH-Gruppen aufweisen. Weiterhin kann es sich auch um vernetzende wirkende Monomere mit zwei oder mehreren isolierten ethylenisch ungesättigen Doppelbindungen handeln. Die Copolymere sollten aber nicht zu stark vernetzt werden. Falls vernetzende Monomere anwesend sind, sollte deren Menge in der Regel 5 mol % bezüglich der Summer aller Monomerer, bevorzugt 3 mol % und besonders bevorzugt 2 mol % nicht überschreiten.

Die Mengen der erfindungsgemäß einzusetzenden Monomere (b1), (b2) und (b3) wurden bereits genannt. Bevorzugt betragen die Mengen von (b1) 35 bis 65 mol % und die Mengen von (b2) 65 bis 35 mol %, besonders bevorzugt beträgt (b1) 40 bis 60 mol % und (b2) 60 bis 40 mol % und ganz besonders bevorzugt beträgt (b1) 45 bis 55 mol % und (b2) 55 bis 45 mol %. Beispielsweise kann die Menge von (b1) und (b2) jeweils ca. 50 mol % betragen.

### Herstellung der Copolymere (B)

Die Herstellung der erfindungsgemäß verwendeten Copolymere (B) wird bevorzugt mittels radikalischer Polymerisation der Monomere vorgenommen. Die Durchführung einer radikalischen Polymerisation einschließlich dazu notwendiger Apparaturen ist dem Fachmann prinzipiell bekannt. Die Polymerisation wird bevorzugt unter Verwendung thermisch zerfallender Polymerisationsinitiatoren durchgeführt werden. Bevorzugt können Peroxide als thermische Initiatoren verwendet werden. Die Polymerisation kann aber selbstverständlich auch photochemisch vorgenommen werden.

Als Monomere (b2a) werden bevorzugt -sofern chemisch möglich- die cyclischen Anhydride der Dicarbonsäuren eingesetzt. Besonders bevorzugt wird Maleinsäureanhydrid eingesetzt.

Als Lösemittel können bevorzugt aprotische Lösemittel wie Toluol, Xylol, Aliphaten, Alkane, Benzin oder Ketone eingesetzt werden. Sofern als Monomere langkettige monoethylenisch ungesättigte Kohlenwasserstoffe eingesetzt werden, welche einen höheren Siedepunkt aufweisen, insbesondere solche mit einem Siedepunkt von mehr als ca. 150°C, kann auch ohne Lösemittel gearbeitet werden. Die ungesättigten Kohlenwasserstoffe fungieren dann selbst als Lösemittel.

Die radikalische Polymerisation mit thermischen Initiatoren kann bei 60 - 250°C, bevorzugt 80 - 200°C, besonders bevorzugt bei 100- 180 °C und insbesondere bei 130 bis 170°C vorgenommen werden. Die Menge an Initiator beträgt 0,1 bis 10 Gew. % bzgl. der Menge der Monomeren, bevorzugt 0,2 bis 5 Gew. % und besonders bevorzugt 0,5 bis 2 Gew. %. In der Regel ist eine Menge von etwa 1 Gew. % empfehlenswert. Die Polymerisationsdauer beträgt üblicherweise 1 -12 h, bevorzugt 2 -10 h und besonders bevorzugt 4 - 8 h. Die Copolymere können nach dem Fachmann bekannten Methoden aus dem Lösemittel isoliert werden oder fallen alternativ direkt lösemittelfrei an.

Sofern die Copolymere nicht weiter zu den Derivaten (b2b) umgesetzt werden, werden vorhandene Anhydridgruppen in der Regel zu den entsprechenden Dicarbonsäureeinheiten hydrolysiert. Die Vorgehensweise richtet sich dabei zweckmäßigerweise nach der vorgesehenen Verwendung des Copolymers.

Sofern das Copolymer in einem wässrigen Bindemittelsystem eingesetzt werden soll, empfiehlt es sich, die Hydrolyse in Wasser vorzunehmen. Hierzu kann das Anhydridgruppen aufweisende Copolymer in Wasser eingebracht und zweckmäßigerweise unter gelindem Erwärmen sowie unter Zusatz einer Base hydrolysiert werden. Bewährt haben sich Temperaturen von bis zu 100°C. Als Basen geeignet sind insbesondere tertiäre Amine wie beispielsweise Dimethylethanolamin. Die Menge an Base beträgt in der Regel 0,1 -2 Äquivalente (bezogen auf Dicarbonsäureanhydrideinheiten im Polymer), bevorzugt 0,5 bis 1,5 Äquivalente und besonders bevorzugt 0,7 -1,2 Äquivalente. Üblicherweise wird etwa ein Äquivalent Base pro Anhydridgruppe eingesetzt. Die erhaltene wässrige Lösung bzw. Dispersion des Copolymers kann direkt zur Herstellung der erfindungsgemäßen Zubereitung für das Verfahren eingesetzt werden. Selbstverständlich können die Copolymere aber auch nach dem Fachmann prinzipiell bekannten Methoden isoliert werden.

Sofern das Copolymer in einem Bindemittelsystem auf Basis organischer Lösemittel eingesetzt werden soll, kann das Copolymer in einem organischen Lösemittel wie beispielsweise THF, Dioxan oder Toluol gelöst bzw. dispergiert werden und Wasser in stöchiometrisch notwendigen Mengen sowie die Base zugegeben werden. Die Hydrolyse kann wie oben beschrieben unter leichtem Erwärmen erfolgen. Alternativ kann nach der Hydrolyse in Wasser aber auch ein Lösemittelaustausch vorgenommen werden.

Copolymere, welche Derivate monoethylenisch ungesättigter Dicarbonsäuren (b2b) umfassen, können prinzipiell auf zwei verschiedenen Synthesewegen hergestellt werden. Zum einen können bereits zur Polymerisation die Derivate (b2b) als Monomere eingesetzt werden. Diese können vorher in einem separaten Syntheseschritt aus den funktionellen Alkoholen (I) bzw. den funktionellen Aminen (II) sowie den Dicarbonsäuren oder bevorzugt deren Anhydriden hergestellt werden.

In einer bevorzugten Ausführungsform der Erfindungen werden wie oben beschrieben zunächst Copolymere aus den Monomeren (b1) sowie den nicht derivatisierten ethylenisch ungesättigten Dicarbonsäuren (b2a) hergestellt. Bevorzugt werden die Dicarbonsäuren hierzu -sofern möglich- in Form ihrer inneren Anhydride eingesetzt, insbesondere bevorzugt wird Maleinsäureanhydrid eingesetzt. Nach Bildung des Copolymers können bei dieser Synthesevariante die einpolymerisierten Dicarbonsäureeinheiten, bevorzugt die entsprechenden Dicarbonsäureanhydrideinheiten und besonders bevorzugt die Maleinsäureanhydrideinheiten in einer polymeranalogen Reaktion mit den funktionellen Alkoholen HO-R¹-X²ₙ (I) und/oder Ammoniak bzw. den funktionellen Aminen HR²N-R¹-X²ₙ (II) umgesetzt werden.

Die Umsetzung kann in Substanz oder bevorzugt in einem geeigneten aprotischen Lösungsmittel vorgenommen werden. Beispiele geeigneter aprotischer Lösungsmittel umfassen insbesondere polare aprotische Lösungsmittel wie Aceton, Methylethylketon (MEK), Dioxan oder THF sowie gegebenenfalls auch unpolare Kohlenwasserstoffe wie Toluol oder aliphatische Kohlenwasserstoffe.

Zur Umsetzung kann das nicht modifizierte Copolymer beispielsweise im Lösemittel vorgelegt und anschließend der gewünschte funktionelle Alkohol HO-R¹-X²ₙ (I), Ammoniak oder das gewünschte funktionelle Amin HR²N-R¹-X²ₙ (II) in der gewünschten Menge zugegeben werden. Die Reagenzien zur Funktionalisierung können zweckmäßigerweise zuvor in einem geeigneten Lösmittel gelöst werden. Die Derivatisierung wird bevorzugt unter Erwärmen durchgeführt. Als Umsetzungszeiten haben sich 2 bis 25 h bewährt. Beim Einsatz von primären Aminen bzw. von Ammoniak werden bei Temperaturen von bis zu 100°C bevorzugt die entsprechenden Amide erhalten, während bei höheren Temperaturen zunehmend auch Imide gebildet werden. Bei 130 bis 140°C werden bereits überwiegend Imide erhalten. Bevorzugt sollte die Bildung vom Imidstrukturen vermieden werden.

Die Mengen der eingesetzten Reagenzien zur Funktionalisierung richtet sich je nach dem gewünschten Funktionalisierungsgrad. Bewährt hat sich eine Menge von 0,5 bis 1,5 Äquivalenten pro Dicarbonsäureeinheit, bevorzugt 0,6 bis 1,2 , besonders bevorzugt 0,8 bis 1,1 und ganz besonders bevorzugt etwa 1 Äquivalent. Sofern man weniger als 1 Äquivalent einsetzt, können verbliebene Anhydridgruppen in einem zweiten Schritt hydrolytisch geöffnet werden.

Natürlich können auch Mischungen aus mehreren funktionellen Alkoholen HO-R¹-X²ₙ (I) und/oder Ammoniak bzw. den funktionellen Aminen HR²N-R¹-X²ₙ(II) eingesetzt werden. Ebenso sind Reaktionsabfolgen möglich bei denen zunächst mit einem Alkohol/Ammoniak/Amin umgesetzt wird und nach erfolgter Reaktion eine weitere Alkohol/Ammoniak/Amin-Komponente zur Umsetzung verwendet wird.

Die erhaltenen organischen Lösungen der modifizierten Copolymere können direkt zur Formulierung organischer vernetzbarer Zubereitungen eingesetzt werden. Selbstverständlich kann das Polymer hieraus aber auch nach dem Fachmann bekannten Methoden isoliert werden.

Zur Einarbeitung in wässrige Formulierungen kann der Lösung zweckmäßigerweise Wasser zugesetzt und das organische Lösungsmittel mittels dem Fachmann bekannter Methoden abgetrennt werden.

Die sauren Gruppen des Polymers können auch ganz oder teilweise neutralisiert werden. Das pH-Wert der Copolymerlösung sollte in der Regel mindestens 6, bevorzugt mindestens 7 betragen, um eine ausreichende Wasserlöslichkeit bzw. -dispergierbar keit zu gewährleisten. Bei nicht funktionalisierten Copolymeren entspricht dieser Wert etwa einem Äquivalent Base pro Dicarbonsäureeinheitinheit. Bei funktionalisierten Copolymeren beeinflussen die funktionellen Gruppen X¹ bzw. X² naturgemäß die Löslichkeitseigenschaften des Copolymers mit. Beispiele geeigneter Basen zum Neutralisieren umfassen Ammonik, Alkali- und Erdalkalihydroxide, Zinkoxid, lineare, cyclische und/oder verzweigte C₁ - C₈-Mono-, Di- und Trialkylamine, lineare oder verzweigte C₁- C₈-Mono-, Di- oder Trialkanolamine, inbesondere Mono-, Di- oder Trialkanolamine, lineare oder verzweigte C₁- C₈-Alkylether linearer oder verzweigter C₁ - C₈-Mono-, Di- oder Trialkanolamine, Oligo- und Polyamine wie beispielsweise Diethylentriamin. Die Base kann nachträglich oder vorteilhaft schon bei der Hydrolyse von Anhydridgruppen eingesetzt werden.

Das Molekulargewicht M_{w} des Copolymers wird vom Fachmann je nach dem gewünschten Verwendungszweck gewählt. Bewährt hat sich ein M_{w} von 1000 bis 100000 g/mol, bevorzugt 1500 bis 50000 g/mol, besonders bevorzugt 2000 bis 20000 g/mol, ganz besonders bevorzugt 3000 bis 15000 g/mol und beispielsweise 8000 bis 14000 g/mol.

Zur Herstellung der erfindungsgemäß verwendeten Zubereitungen können ein einziges Copolymer (B) oder auch mehrere unterschiedliche Copolymer (B) eingesetzt werden. Der Fachmann trifft unter den prinzipiell möglichen Copolymeren (B) je nach den gewünschten Eigenschaften der Korrosionsschutzschicht eine bestimmte Auswahl. Für den Fachmann ist selbstverständlich, dass nicht alle Arten von Copolymeren (B) für alle Arten von Bindemittelsystemen, Lösungsmitteln oder Oberflächen gleichermaßen gut geeignet sind.

Die erfindungsgemäß eingesetzten Copolymere (B) werden in einer Menge von 0,1 bis 40 Gew. %, bevorzugt 0,2 bis 20 Gew. % und besonders bevorzugt 0,5 bis 10 Gew. % eingesetzt, jeweils bezogen auf die Menge aller Komponenten der Formulierung.

### Lösemittel (C)

Als Komponente (C) umfasst die Zubereitung ein geeignetes Lösemittel. Geeignete Lösemittel sind solche, welche in der Lage sind, die erfindungsgemäß verwendeten Komponenten zu lösen, zu dispergieren, zu suspendieren oder zu emulgieren, um einen gleichmäßigen Auftrag der Zubereitung auf die Oberfläche zu ermöglichen. Es kann sich dabei um organische Lösemittel oder um Wasser handeln. Selbstverständlich auch um Gemische verschiedener Lösemittel handeln.

Beispiele organischer Lösemittel umfassen Kohlenwasserstoffe wie Toluol, Xylol sowie insbesondere Gemische von Kohlenwasserstoffen bestimmter Siedebereiche, wie sie bei der Raffination von Rohöl erhalten werden, Ether wie THF oder Polyether wie Polyethylenglykol, Etheralkohole wie Butylglykol, Etherglykolacetate wie Butylgklykolacetat, Ketone wie Aceton, Alkohole wie Methanol, Ethanol oder Propanol.

Bevorzugt handelt es sich bei dem Lösemittel um Wasser oder ein überwiegend wässriges Lösungsmittelgemisch. Darunter sollen solche Gemische verstanden werden, die zumindest 75 Gew. %, bevorzugt mindestens 85 Gew. %, besonders bevorzugt mindestens 90 Gew. % und ganz besonders bevorzugt mindestens 95 Gew. % Wasser umfassen.

Bei weiteren Komponenten überwiegend wässriger Lösemittelgemische kann es sich um mit Wasser mischbare Lösungsmittel handeln. Beispiele umfassen insbesondere typische Colösemittel wie n-Butanol, Butylglykol, Butyldiglykol, N-Methyl-2-pyrrolidon oder N-Ethyl-2-pyrrolidon. Bei weiteren Komponenten kann es sich aber auch um mit Wasser nicht mischbare Lösemittel handeln. Derartige Lösemittel werden häufig als Filmbildehilfsmittel eingesetzt. Beispiele umfassen Butylglykolacetat, Butylglykoldiacetat oder 2,2,4-Trimethyl-1,3-pentandiol-1-isobutyrat (Texanol®).

Die Menge des Lösemittels oder Lösemittelgemisches beträgt 5 bis 83,9 Gew. % bezüglich der Summe aller Komponenten der Formulierung. Sie wird vom Fachmann je nach den gewünschten Eigenschaften der Anstrichformulierung bestimmt. Bevorzugt beträgt die Menge 10 bis 74,8 Gew. %, besonders bevorzugt 20 bis 64,5 Gew. % und beispielsweise 30 bis 50 Gew. %.

### Füllstoff / Pigment /Farbstoff (D)

Die erfindungsgemäß verwendete Zubereitung umfasst weiterhin mindestens eine Komponente (D) ausgewählt aus der Gruppe von feinteiligen Füllstoffen, Pigmenten oder Farbstoffen.

Bei dem feinteiligen Füllstoff handelt es sich in der Regel um einen anorganischen Füllstoff. Füllstoffe und/oder Pigmente können selbstverständlich eine zusätzliche organische Beschichtung, beispielsweise zur Hydrophobierung oder Hydrophilierung umfassen.

Der Füllstoff sollte eine durchschnittliche Partikelgröße von 10 µm nicht überschreiten. Bevorzugt beträgt die durchschnittliche Partikelgröße 10 nm bis 8 µm, besonders bevorzugt 100 nm bis 5 µm und beispielsweise 2 bis 4 µm. Bei runden oder annähernd runden Partikeln bezieht sich diese Angabe auf den Durchmesser, bei unregelmäßig geformten, wie bspw. bei nadelförmigen Partikeln auf die längste Achse. Mit der Partikelgröße ist die Primärpartikelgröße gemeint. Dem Fachmann ist selbstverständlich bekannt, dass sich feinteilige Feststoffe häufig zu größeren Partikel agglomerieren, die zur Verwendung intensiv dispergiert werden müssen. Die Partikelgröße wird vom Fachmann je nach den gewünschten Eigenschaften der Schicht gewählt.

Bei den Pigmenten kann es sich insbesondere um Korrosionsschutzpigmente handeln. Es kann sich sowohl um aktive wie um passive Korrosionsschutzpigmente handeln.

Beispiele von aktiven Korrosionsschutzpigmenten umfassen insbesondere Phosphate, phosphathaltige oder modifizierte Phosphate wie Pigmente auf Basis von Zinkphosphat, Zinkaluminiumorthophosphat, Zink-Molybdän-Orthophosphat, Zink-Aluminium-Molybdän-Orthophosphat, Calciumhydrogenphosphat, Zink-Calcium-Strontium Orthophosphat-Silicat, Zink-Aluminium-Polyphosphat, Strontium-Aluminium-Polyphosphat, Zink-Calcium-Aluminium-Strontium-Orthophosphat-Polyphosphat-Silikat, Calcium-Aluminium-Polyphosphat-Silikat. Weitere Beispiele umfassen Kombinationen anorganischer Phosphate mit schwerlöslichen, elektrochemisch aktiven organischen Korrosionsinhibitoren wie mit Zn- oder Ca-Salzen von 5-Nitroisophthalsäure modifiziertes Zinkphosphat. Weiterhin können auch Eisenphosphid, Zinkhydroxyphosphid, Borosilikat-Pigmente wie Bariummetaborat oder Zinkborophosphate, Molybdate wie Zinkmolybdat, Natriumzinkmolybdate oder Calciummolybdat, Pigmente mit ionenaustauschenden Eigenschaften wie mit Calcium-lonen modifiziertes amorphes SiO₂ oder entsprechend modifizierte Silikate, Metalloxide wie beispielsweise ZnO oder auch Metallpulver wie beispielsweise Zinkstaub eingesetzt werden. Selbstverständlich können auch typische organische Korrosionsschutzpigmente wie bspw. Zn- oder Ca-Salze von 5-Nitroisophthalsäure eingesetzt werden.

Passive Korrosionsschutzpigmente verlängern die Diffusionswege für korrosiv wirkende Komponenten und erhöhen dadurch die Korrosionsbeständigkeit. Beispiele umfassen vor allem plättchenförmige oder lamellenförmige Pigmente wie Glimmer, Hämatit, Schichtsilikate, lineare Polysilikate wie beispielsweise-Wollastonit, Talk oder Metallplättchen wie Aluminium- oder Eisenplättchen.

Weitere Einzelheiten zu Korrosionsschutzpigmenten sind beispielsweise in "Pigments, 4.2 Anticorrosive Pigments" in Ullmann's Encyclopedia of Technical Chemistry, 6th Edition 2000, Electronic Release.

Bei den Pigmenten kann es sich auch um typische Farb- und/oder Effektpigment handeln.

Unter Effektpigmenten sind alle Pigmente zu verstehen, die einen plättchenförmigen Aufbau zeigen und einer Oberflächenbeschichtung spezielle dekorative Farbeffekte verleihen. Effektpigmente sind dem Fachmann bekannt. Beispiele umfassen reine Metallpigmente, wie z.B. Aluminium-, Eisen- oder Kupferpigmente, Interferenzpigmente, wie z.B. titandioxidbeschichteter Glimmer, eisenoxidbeschichteter Glimmer, mischoxidbeschichteter Glimmer (z.B. mit Titandioxid und Fe₂O₃), metalloxidbeschichtetes Aluminium, oder Flüssigkristallpigmente.

Bei Farbpigmenten handelt es sich insbesondere um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Beispiele für Farbstoffe sind Azo-, Azin-, Anthrachinon-, Amidin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder substantive Farbstoffe.

Mit Füllstoffen lassen sich die Eigenschaften der Beschichtung, wie beispielsweise Härte, Rheologie oder die Orientierung der Effektpigmente beeinflussen. Füllstoffe sind häufig coloristisch unwirksam; d.h. sie weisen eine geringe Eigenabsorption auf und die Brechzahl ist ähnlich der Brechzahl des Beschichtungsmediums. Beispiele für Füllstoffe umfassen Talkum, Calciumcarbonat, Kaolin, Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-10 µm. Weiterhin können als Füllstoffe beliebige feste inerte organische Partikel, wie z.B. Harnstoff-Formaldehyd-Kondensationsprodukte, mikronisiertes Polyolefinwachs oder mikronisiertes Amidwachs, eingesetzt werden. Die inerten Füllstoffe können jeweils auch in Mischung eingesetzt werden. Bevorzugt wird jedoch jeweils nur ein Füllstoff eingesetzt.

Die Komponenten (D) werden in einer Menge von 1 bis 70 Gew. % eingesetzt. Die genaue Menge wird vom Fachmann je nach den gewünschten Eigenschaften der Schicht festgelegt. Bevorzugt beträgt die Menge 5 bis 60 Gew. % und besonders bevorzugt 10 bis 50 Gew. %.

Bei der Verwendung von Pigmenten und/oder Füllstoffen haben sich dabei Pigment-Volumen-Konzentrationen (PVK) von 15 bis 40 Vol. %, bevorzugt 20 bis 40 Vol. % und besonders bevorzugt 20 bis 35 Vol % bewährt, ohne dass die Erfindung darauf beschränkt sein soll.

Die Art und Menge von Komponenten (D) werden vom Fachmann je nach dem Verwendungszweck der Schicht bestimmt. In einer besonders bevorzugten Ausführungsform der Erfindung werden keine chromhaltigen Komponenten (D) eingesetzt. Selbstverständlich können auch Gemische verschiedener Komponenten (D) eingesetzt werden.

Zum Grundierung vorgesehene Zubereitungen werden üblicherweise höher pigmentiert als zur Zwischen- oder Deckbeschichtung vorgesehene Zubereitungen.

Zur Grundierung vorgesehene Zubereitungen umfassen üblicherweise mindestens ein aktives Korrosionsschutzpigment, für Zwischenbeschichtungen vorgesehen Zubereitungen mindestens ein passives Korrosionsschutzpigment und Zubereitungen für Deckbeschichtungen mindestens ein Farbpigment und/oder einen Farbstoff.

In einer besonders bevorzugten Ausführungsform umfassen zur Grundierung vorgesehene Zubereitungen mindestens ein aktives Korrosionschutzpigment, mindestens einen Füllstoff sowie bevorzugt weiterhin mindestens ein Farbpigment.

### Weitere Komponenten (E)

Über die Komponenten (A) bis (D) hinaus kann die erfindungsgemäß verwendete Zubereitung noch einen oder mehrere Hilfsstoffe und/oder Additive (E) umfassen. Derartige Hilfsstoffe und/oder Additive dienen zur Feinsteuerung der Eigenschaften der Schicht. Ihre Menge übersteigt im Regelfalle nicht 20 Gew. % bzgl. der Summe aller Komponenten mit Ausnahme der Lösemittel, bevorzugt nicht 10 %.

Beispiele geeigneter Zusatzstoffe umfassen Rheologiehilfsmittel, UV-Absorber, Lichtschutzmittel, Radikalfänger, Katalysatoren für die thermische Vernetzung, Slipadditive, Polymerisationsinhibitoren, Entschäumer, Emulgatoren, Entgasungsmittel, Netz- und Dipergiermittel, Haftvermittler, Verlaufsmittel, filmbildende Hilfsmittel, rheologiesteuemde Additive (Verdicker), Flammschutzmittel, Sikkative, Hautverhinderungsmittel, sonstige Korrosionsinhibitoren oder Wachse und Mattierungsmittel. Derartige Zusatzstoffe sind beispielsweise in »Lackadditive«, Hrsg. Johan Bieleman, Wiley-VCH, Weinheim, New York, 1998, oder DE-A 199 14 896, Spalte 13, Zeile 56, bis Spalte 15, Zeile 54 offenbart.

### Herstellung der Zubereitung

Die erfindungsgemäße Zubereitung kann durch intensives Mischen aller Komponenten der Zubereitung hergestellt. Dem Fachmann sind geeignete Misch- oder Dispergieraggregate bekannt.

In einer bevorzugten Ausführungsform der Erfindung kann zunächst eine Dispersion aus dem Bindemittelsystem (A), dem Copolymer (B) sowie zumindest einem Teil des Lösemittels (C) hergestellt werden. Sofern es sich bei dem Bindemittel (A) um eine Primärdispersion handelt, ist das Bindemittel naturgemäß vordispergiert. Sofern das Bindemittel als Feststoff vorliegt, wird zunächst eine Lösung bzw. eine Sekundärdispersion hergestellt. Das Copolymer (B) wird ebenfalls bevorzugt in einem Lösemittel gelöst, emulgiert oder dispergiert eingesetzt. Vorteilhaft werden hierzu die Lösungen bzw. Emulsionen der Copolymere (B) verwendet, die bei der Herstellung der Copolymere (B) anfallen, ohne dass die Copolymere vorher noch isoliert werden.

Die Komponenten (D) sowie ggf. weitere Komponenten (E) können anschließend in der Vordispersion gelöst bzw. dispergiert werden.

### Ausführung des Verfahrens

Die erfindungsgemäße Zubereitung wird zum Aufbringen von Korrosionsschutzschichten auf metallische Oberflächen verwendet. Es kann sich hierbei um alle Arten von Korrosionsschutzbeschichtungen handeln, wie beispielsweise Grundierungen (I), Zwischenbeschichtungen (II) und Deckbeschichtungen (III). Selbstverständlich kann es sich auch um Korrosionsschutzbeschichtungen handeln, welche die Eigenschaften von mindestens zwei dieser Schichten oder aller drei Schichten kombinieren, und somit zu einem vereinfachten Schichtaufbau beitragen. Weiterhin kann es sich um eine Fertigungsbeschichtung handeln. Hierunter versteht der Fachmann eine Schicht, die auf frisch gestrahlten Stahl aufgebracht werden kann, um Korrosionsschutz noch während der Fertigung von Stahlbauteilen, also beispielsweise während der Zusammenschweißens von Teilen, zu gewährleisten.

Das erfindungsgemäße Verfahren kann dem Erstschutz oder auch der Instandsetzung dienen.

Im Regelfalle empfiehlt es sich, die metallische Oberfläche für die Durchführung des erfindungsgemäßen Verfahrens in einem Verfahrensschritt (0) vorzubereiten, auch wenn dies nicht in jedem Fall absolut zwingend ist. Unter Oberflächenvorbereitung für die Durchführung von Korrosionsschutzmaßnahmen versteht der Fachmann die Reinigung der Oberfläche von allen Verunreinigungen sowie das Einstellen einer auf die Korrosionsschutzmaßnahme abgestimmten Oberflächenrauigkeit. Beispiele für Reinigungsverfahren umfassen das Reinigen mit Wasser oder Lösemitteln, Beizen mit geeigneten Formulierungen oder Hochdruckreinigen. Beispiele weiterer Maßnahmen umfassen Schleifen und insbesondere Strahlen der Oberfläche, beispielsweise Sandstrahlen sowie weiterhin Flammstrahlen. Es können hierbei alle anhaftenden Schichten bis hinunter zum blanken Metall abgetragen werden. Es ist aber auch möglich, unter Anwendung weniger intensiver Methoden nur schlecht haftende Schichten abzutragen, während intakte Schichten auf der Oberfläche verbleiben. Eine mögliche Technik hierzu ist das sogenannte Sweep-Strahlen.

Zur Ausführung des erfindungsgemäßen Verfahrens wird mindestens eine Korrosionsschutzschicht mit einer Dicke von mindestens 15 µm auf die metallische Oberfläche aufgebracht, wobei man die beschriebene, unter atmosphärischen Bedingungen vernetzbare Zubereitung einsetzt.

Die Korrosionsschutzschicht kann dabei unmittelbar auf die blanke metallische Oberfläche aufgebracht werden oder aber auf eine bereits mit einer Korrosionsschutzschicht vorbeschichtete Oberfläche.

Bevorzugt handelt es sich bei der mindestens einen Korrosionsschutzschicht um eine Grundierungsschicht (I), welche entweder direkt auf das blanke Metall oder auf eine eine Fertigungsbeschichtung aufweisende Metalloberfläche aufgebracht wird. Die optional vorhandene Fertigungsbeschichtung kann ebenfalls mit der erfindungsgemäßen Formulierung oder aber auch mittels einer anderen Formulierung erhalten werden.

Zum Aufbringen können die üblichen, dem Fachmann bekannten Techniken eingesetzt werden. Bevorzugt wird die Zubereitung aufgestrichen oder aufgespritzt.

Nach dem Aufbringen auf die Oberfläche härtet die aufgebrachte Beschichtung in Verfahrensschritt (2) unter atmosphärischen Bedingungen aus. Dies kann im einfachsten Falle durch das allmähliche Verdampfen des Lösemittels erfolgen. Je nach der Natur des eingesetzten Bindemittels können noch andere Vernetzungsprozesse ablaufen. Einzelheiten hierzu wurden bereits oben dargestellt.

Je nach der Dicke der gewünschten Korrosionsschutzschicht, kann die gesamte Schicht in einem einzigen Arbeitsgang aufgebracht werden, oder aber es können auch mehrere gleichartige Schichten nacheinander aufgebracht und jeweils gehärtet werden, um die gewünschte Gesamtschichtdicke der Korrosionsschutzschicht zu erreichen.

Auf die Grundierung (I) können noch weitere Korrosionsschutzschichten aufgebracht werden. Art und Anzahl der weiteren Schichten werden vom Fachmann bestimmt. Insbesondere kann die Grundierung (I) in weiteren Arbeitsgängen mit einer Zwischenschicht (II) und mit einer Deckschicht (III) versehen werden. Hierzu können im Prinzip beliebige Lacksysteme verwendet werden, vorausgesetzt, es treten in Kombination mit der Grundierung (I) keine unerwünschten Effekte auf. Durch das erfindungsgemäß verwendete Copolymer (B) wird die Haftung weiterer Schichten auf der Grundierung verbessert. Vorteilhaft können zur Grundierung (I), für die Zwischenschicht (II) sowie für die Deckschicht erfindungsgemäße Zubereitungen eingesetzt werden.

In einer weiteren, bevorzugten Ausführungsform des Verfahrens wird zunächst eine integrierte Grundierung (la) aufgebracht, welche direkt mit einem Decklack (III) überlackiert werden kann. Eine integrierte Grundierung kombiniert also die Eigenschaften der Grundierung (I) und der Zwischenschicht (III).

In einer weiteren, bevorzugten Ausführungsform der Erfindung wird nur eine einzige integrierte Korrosionsschutzschicht (1b) aufgebracht, welche nicht überlackiert zu werden braucht. Eine integrierte Korrosionsschutzschicht kombiniert also die Eigenschaften aller drei Schichten.

Die Dicke der ausgehärteten, mindestens einen Korrosionsschutzschicht beträgt erfindungsgemäß mindestens 15 µm, bevorzugt mindestens 25 µm, besonders bevorzugt mindestens 40 µm, ganz besonders bevorzugt mindestens 60 µm und beispielsweise mindestens 100 µm. Sie wird vom Fachmann je nach den gewünschten Eigenschaften und dem Einsatzzweck der Schicht festgelegt.

Fertigungsbeschichtungen sind üblicherweise dünn, beispielsweise 15 bis 25 µm. Die Dicke von Korrosionsschutzschichten, bei denen es sich nicht um Fertigungsschichten handelt, beträgt in der Regel mindestens 25 µm, bevorzugt mindestens 40 µm, besonders bevorzugt mindestens 60 µm und ganz besonders bevorzugt mindestens 100 µm.

Die obere Grenze für die Gesamtschichtdicke, d.h. die Dicke aller aufgebrachten Korrosionsschutzschichten zusammen, beträgt 2 mm, bevorzugt weniger als 1,5 mm, besonders bevorzugt weniger als 1 mm, ganz besonders bevorzugt weniger als 800 µm und insbesondere weniger als 500 µm.

Die folgenden Beispiele sollen die Erfindung näher erläutern.

### Teil A- Synthese der eingesetzten Copolymere

### Copolymer A

### Copolymer aus MSA/C₁₂-Olefin (molares Verhältnis 1/1)

In einem 21-Pilotrührwerk werden 176,4 g (1,05 mol) n-Dodecen-1 vorgelegt, mit Stickstoff begast und auf 150°C aufgeheizt. Innerhalb von 6h werden ein Zulauf 1 aus 147,1 g geschmolzenen Maleinsäureanhydrids (80°C, 1,50 mol) und ein Zulauf 2 aus 4,1g Di-tert-Butylperoxid (1 % bez. auf Monomere) in 75,6 g (0,45 mol) n-Dodecen-1 zugetropft. Die Reaktionsmischung wird weitere 2h bei 150°C gerührt. Man erhält ein leicht gelbliches, festes Harz.

In einem zweiten Verfahrenschritt werden die in das Copolymer einpolymerisierten MSA-Einheiten hydrolytisch geöffnet.

Hierzu werden in einem 1I Rundkolben 124,9 g des wie beschrieben erhaltenen Copolymers zerkleinert, in 332 g Wasser suspendiert und auf 100°C erhitzt. Innerhalb einer Stunde werden 41,7 g Dimethylethanolamin zugetropft und die Mischung weitere 6h bei 100°C gerührt. Es wird eine Lösung mit Feststoffgehalt von 25,8% erhalten.

### Copolymer B

### Copolymer aus MSA/C₁₂-Olefin/Polyisobuten 1000 (molares Verhältnis 1/0,8/0,2)

In einem 2L Pilotrührwerk mit Ankerrührer und Innenthermometer werden 600,0 g (0,6 mol) hochreaktives Polyisobuten (α-Olefingehalt > 80%) mit einem Mₙ von 1000 g/mol (Glissopal® 1000, Fa. BASF) und 322,5 g (1,92 mol) C₁₂-Olefin unter Rühren und Stickstoffbegasung auf 150 °C aufgeheizt. Anschließend werden innerhalb 6 h ein Zulauf 1, bestehend aus 294,0 g Maleinsäureanhydrid (80°C, 3,0 mol), sowie Zulauf 2, bestehend aus 13,0 g Di-t-Butylperoxid (1 % bez. auf Monomere) und 80,6 g (0,48 mol) C₁₂-Olefin zudosiert. Nach Ende von Zulauf 1 und 2 werden weitere 2 h bei 150 °C gerührt. Man erhält ein festes gelbliches Polymer.

Zur hydrolytischen Öffnung der MSA-Einheiten werden 150 g des wie beschrieben erhaltenen Copolymers zerkleinert, in 400 g Wasser suspendiert und auf 100°C erhitzt. Innerhalb einer Stunde werden 30,9 g Dimethylethanolamin zugetropft und die Mischung weitere 6h bei 100°C gerührt. Es wird eine Lösung mit Feststoffgehalt 26,8% erhalten.

Der K-Wert des Copolymers B beträgt 22,6 (bestimmt nach H. Fikentscher, CelluloseChemie, Bd. 13, S. 58-64 und 71-74 (1932) in 1 Gew.-%iger Lösung bei 25°C und unkorrigiertem pH-Wert).

### Teil B - Anwendungstechnische Prüfung

Zur anwendungstechnischen Prüfung wurde eine Korrosionsschutzformulierung auf Basis einer handelsüblichen wässrigen Styrol-Acrylat-Dispersion für Anstrichstoffe (Acronal^{®} Optive 410, Fa. BASF Corp.). Die verwendete Dispersion weist die folgenden Eigenschaften auf:

| | |
|---|---|
| Feststoffgehalt | 49-51 % |
| pH | 7,5 - 8,5 |
| Brookfield-Viskosität | 500 -1000 cps |
| Dichte | 1,06 g/cm³ |
| MFFT (Minimum Film Forming Temperature (nach ASTM D 2354)) | ca. 12°C |
| Partikelgröße | ca. 110 nm |

Zur Herstellung der erfindungsgemäßen Formulierungen wurden der genannten Styrol-Acrylat-Dispersion jeweils 3 Gew. % der Copolymere A bzw. B zugegeben (gerechnet als festes Copolymer bezüglich des Feststoffanteils der Dispersion). Hierzu wurden die oben beschriebenen wässrigen Emulsionen der Copolymere A bzw. B eingesetzt.

Zu Vergleichszwecken wurden einer weiteren Probe der Dispersion 3 Gew. % eines handelsüblichen Styrol-Acrylsäure-Copolymers zugesetzt. Weiterhin wurde eine weitere Probe ohne Zusatz eines polymeren Korrosionsinhibitors hergestellt. Die eingesetzten Dispersionen sind in Tabelle 1 zusammen gestellt.

**Tabelle 1: Eingesetzte Dispersionen zur Herstellung von Lacken**

| Nr. | Eingesetztes Korrosionsschutzpolymer |
|---|---|
| Beispiel 1 | Copolymer A (MSA/C₁₂-Olefin (1/1)) |
| Beispiel 2 | Copolymer B (MSA/C₁₂-Olefin/Polyisobuten 1000 (1/0,810,2)) |
| Vergleichsbeispiel 1 | - |
| Vergleichsbeispiel 2 | Styrol-Acrylsäure-Copolymer (ca. 35 mol % Acrylsäure), M_{w} 4700 g/mol |

### Richtformulierung für Korrosionsschutz-Grundierungen

Unter Verwendung der erhaltenen wässrigen Dispersionen aus Styrol-Acrylat-Copolymer mit und ohne Zusatz von Korrosionsschutzpolymeren wurden Zubereitungen gemäß folgender Vorschrift hergestellt:

393,4 g der jeweiligen wässrigen Polymerdispersion werden mit 2,2 g eines handelsüblichen Entschäumers für Lacke (Mischung von Polysiloxanen und hydrophoben Feststoffen in Polyglykol; BYK® 022, Fa. Byk) versetzt, anschließend wird mittels eines Dispermaten eine Mischung bestehend aus 0,6 g eines anionischen Dispergiermittels (saurer Phosphorsäureester eines Fettalkoholalkoxylates; Lutensit^{®} A-EP, Fa. BASF AG), 11,0 g konz. Ammoniak und 58,6 g Wasser zugegeben. Unter Rühren wird weiterhin eine Mischung aus 7,2 g Phenoxypropanol (Filmbildehilfsmittel) und 7,2 g Benzin 180-210°C (Filmbildehilfsmittel) eingearbeitet.

Anschließend werden 85,0 g eines Hämatit-Pigmentes (Bayferrox^{®} 130 M, Fa. Lanxess), 82,1 g eines Korrosionsschutzpigmentes auf Basis Zinkphosphat (Heucophos^{®} ZPZ, modifiziertes Zinkphosphat, Fa. Heubach), 36,0 g Magnesiumsilikat (Füllstoff; Talkum 20 M 2, Fa. Luzenac) sowie 127,8 g eines Füllstoffes auf Basis Bariumsulfat und Zinksulfid (30 Gew. % ZnS) (Litopone^{®} L) zugegeben. Die gesamte Mischung wird für mindestens 30 Minuten mit Glasperlen (ø 3mm) dispergiert.

Daraufhin werden unter weiterem Rühren weitere 166,4 g Polymerdispersion, 1,9 g BYK^{®} 022 sowie 3,7 g einer 1:1-Mischung aus Wasser und einem handelsüblichen Korrosionsinhibitor (Korrosionsinhibitor L 1, Fa. Erbslöh) zugegeben und die Glasperlen abgesiebt.
Zum Abschluss wird der Ansatz mit einer Mischung aus 3,7 g einer 25 % igen Lösung eines handelsüblichen Verdickungsmittels auf Urethan-Basis (Collacral PU 85, Fa. BASF AG) und 13,2 g Butylglykol (Lösungsmittel) versetzt sowie gegebenenfalls der pH-Wert mit konz. Ammoniak auf ca. 9,5 nachgestellt. Man erhält 1000 g einer Korrosionsschutz-Grundierung mit 61% Feststoffgehalt und einer Pigment/Volumen-Konzentration (PVK) von 23%.

### Applikation der Formulierungen auf Stahlbleche, Vorbereitung für den Salzsprühtest

Die zu prüfenden Grundierungen wurden mit vollentsalztem Wasser auf die gewünschte Viskosität (300 bis 1000 mPas (ICI Rotothinner Kugel)) verdünnt und auf ein gereinigtes unverzinktes Stahlblech (200 x 80 x 0,9 mm) mit einem Kastenrakel aufgezogen; die Spaltgröße wird dabei so gewählt, dass sich eine Trockenschichtdicke von 60-85 µm ergibt.

Nach sechstägiger Trocknung bei Raumtemperatur sowie einer eintägigen Temperung bei 50°C wurden die Rückseite des Prüfblechs zum Schutz vor Korrosion mit einem lösemittel-basierten Lack beschichtet sowie die Kanten mit Tesa-Film abgeklebt.

Abschließend wurde das Prüfblech auf der mit der zu testenden Grundierung beschichteten Seite mit einem Ritzstachel bis auf das Substrat geritzt.

### Salzsprühtest / Auswertung

Mit den Testblechen wurde ein Salzsprühtest gemäß DIN EN ISO 7253 (Prüfdauer 240 h) durchgeführt.

### Zur Bewertung des Korrosionsverhaltens:

### Flächenkorrosion

Anteil der korrodierten Fläche im Verhältnis zur Gesamtfläche des Prüfbleches in [%]

### Gitterschnitt (gemäß DIN EN ISO 2409)

Mittels des Gitterschnitt-Tests wird die Haftung des Lackes auf dem Untergrund ermittelt.
Hierzu wird nach dem Salzsprühtest ein Gitter aus mehreren Schnitten (Linienabstand 2 mm) in den Lack eingeschnitten, mit einem Klebeband beklebt und danach das Klebeband abgezogen. Bewertet wurde das Aussehen des Gitters nach Abziehen des Klebebandes. Es werden Noten von 0 bis 5 nach folgender Skala vergeben.
- GT 0: Die Schnittränder sind vollkommen glatt und keines der Quadrate des Gitters ist abgeplatzt.
- GT 1: Die Beschichtung ist längst der Schnittränder abgeplatzt, die abgeplatzte Fläche ist aber nicht wesentliche größer als 15% der Gitterschnittfläche.
- GT 2: Die abgeplatzte Gitterfläche ist deutlich größer als 15% aber nicht wesentlich größer als 35%.
- GT 3: Die Beschichtung ist längst der Schnittränder teilweise oder ganz in breiten Streifen abgeplatzt oder einige Quadrate sind ganz oder teilweise abgeplatzt.
- GT 4: Die betroffene Gitterschnittfläche ist aber nicht wesentlich größer als 65%.
- GT 5: Jedes Abplatzen, das stärker als GT 4 eingestuft werden kann.

Der Test wurde einmal direkt nach dem Salzsprühtest durchgeführt, ein zweites Mal nach eintägigem Trocknen des Testbleches.

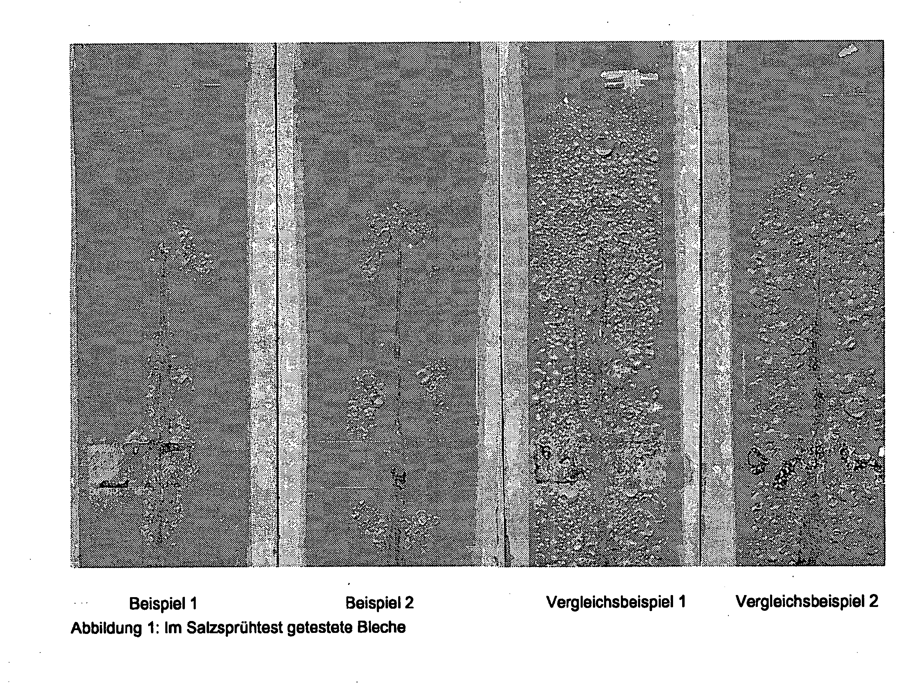

Die Ergebnisse der Tests sind in Tabelle 2 zusammengestellt.
Aufnahmen der Probenoberfläche sind in Abbildung 1 zusammengestellt.

Die Daten in Tabelle 1 sowie Abbildung 1 zeigen, dass die Korrosion durch die erfindungsgemäß verwendeten Copolymere (B) deutlich gehemmt wird, und zwar nicht nur im Vergleich zu einer Probe ohne polymere Korrosionsinhibitoren, sondern auch im Vergleich einem Copolymer aus Acrylsäure und Styrol. Während bei der Vergleichsprobe ohne Korrosionsinhibitor ca. 90 % der Fläche, und bei der zweiten Vergleichsprobe mit einem Styrol-Acrylsäure-Copolymer ca. 60 % der Fläche korrodiert sind, sind es bei den erfindungsgemäßen Beispielen nur 5 bis 15 % der Fläche. Die erfindungsgemäß verwendeten Copolymere sind ganz besonders vorteilhaft für Korrosionsschutzanstriche.

**Tabelle 2: Zusammenstellung der Resultate im Salzsprühtest**

| | Beispiel 1 | Beispiel 2 | Vergleichsbeispiel 1 | Vergleichsbeispiel 2 |
|---|---|---|---|---|
| Polymerer Korrosionsinhibitor | Copolymer A MSA / C₁₂-Olefin-Copolymer (1/1) | Copolymer B MSA/C₁₂-Olefin/PIB1000 (1/0,8/0,2) | Ohne | Acrylsäure-Styrol-Copolymer |
| pH-Wert der Formulierung | 9,3 | 9,2 | 9,6 | 9,6 |
| Schichtdicke [µm] | 65 bis 82 | 67 bis 77 | 66 bis 84 | 76 bis 89 |
| Flächenkorrosion | ca. 5% | ca. 15% | ca. 90% | ca. 60% |
| Gitterschnitt | | | | |
| Im Anschluss an Test | 0-2 | 1-2 | 5 | 0-2 |
| nach Rücktrocknung | 0-2 | 0-2 | 0-2 | 0-2 |

## Patentansprüche

1. Zubereitung zum Aufbringen von Korrosionsschutzschichten auf metallische Oberflächen umfassend mindestens die folgenden Komponenten:
(A) 15 bis 70 Gew. % mindestens eines unter atmosphärischen Bedingungen härtbaren Bindemittelsystems (A),
(B) 0,1 bis 40 Gew. % mindestens eines polymeren Korrosionsschutzmittels,
(C) 5 bis 83,9 Gew. % mindestens eines Lösemittels,
(D) 1 bis 70 Gew. % mindestens einer Komponente (D) ausgewählt aus der Gruppe von feinteiligen Füllstoffen, Pigmenten oder Farbstoffen,
wobei die Mengen jeweils auf die Gesamtmenge aller Komponenten der Formulierung bezogen sind,
**dadurch gekennzeichnet, dass** es sich bei dem Korrosionsschutzmittel um mindestens ein Copolymer (B) handelt, welches aus den folgenden monomeren Baueinheiten aufgebaut ist:
(b1) 70 bis 30 mol % mindestens eines monoethylenisch ungesättigten Kohlenwasserstoffs (b1a) mit 9 bis 27 C-Atomen und/oder mindestens eines Monomers (b1b) ausgewählt aus der Gruppe von mit funktionellen Gruppen X¹ modifizierten monoethylenisch ungesättigten Kohlenwasserstoffen (b1b') und Vinylethern (b1 b"),
(b2) 30 bis 70 mol % mindestens einer monoethylenisch ungesättigten Dicarbonsäure mit 4 bis 8 C-Atomen und/oder ihres Anhydrids (b2a) und/oder Derivaten (b2b) davon,
wobei es sich bei den Derivaten (b2b) um Ester der Dicarbonsäuren mit Alkoholen der allgemeinen Formel HO-R¹-X²ₙ (I) und/oder Amide bzw. Imide mit Ammoniak und/oder Aminen der allgemeinen Formel HR²N-R¹-X²ₙ (II) handelt, und die Abkürzungen die folgende Bedeutung haben:
R¹: (n+1)-wertige Kohlenwasserstoffgruppe mit 1 bis 40 C-Atomen, bei der nicht benachbarte C-Atome auch durch O und/oder N substituiert sein können,
R²: H, C₁- bis C₁₀-Kohlenwasserstoffgruppe oder - (R¹-X²ₙ)
n: 1,2 oder 3
X²: eine funktionelle Gruppe ausgewählt aus der Gruppe von -Si(OR³)₃ (mit R³ = C₁- bis C₆-Alkyl), -OR⁴, -SR⁴, -NR⁴₂, -COOR⁴, -(C=O)R⁴, -COCH₂COOR⁴, -CSNH₂, - CN, -PO₂R⁴₂, -PO₃R⁴₂, -OPO₃R⁴₂, (mit R⁴ = H, C₁ bis C₆-Alkyl, Aryl) oder -SO₃H, sowie
(b3) 0 bis 10 mol % anderer ethylenisch ungesättigter Monomere, die von (b1) und (b2) verschieden, aber mit (b1) und (b2) copolymerisierbar sind,
wobei die Mengen jeweils auf die Gesamtmenge aller Monomereinheiten im Copolymer bezogen sind.

2. Zubereitung gemäß Anspruch 1, **dadurch gekennzeichnet, dass** es sich es sich bei dem Monomer (b2a) um Maleinsäure und/oder Maleinsäureanhydrid handelt.

3. Zubereitung gemäß Anspruch 1 oder 2, **dadurch gekennzeichnet, dass** das Copolymer (B) mindestens ein Monomer des Typs (b1a) umfasst.

4. Zubereitung gemäß einem der Ansprüche 1 bis 3, **dadurch gekennzeichnet, dass** es sich bei den Monomeren (b1a) um monoethylenisch ungesättigte Kohlenwasserstoffe mit 12 bis 24 C-Atomen handelt.

5. Zubereitung gemäß einem der Ansprüche 1 bis 4, **dadurch gekennzeichnet, dass** das Copolymer weiterhin 1 bis 60 mol %, bezogen auf die Menge aller Monomere (b1), mindestens eines reaktiven Polyisobutens umfasst.

6. Zubereitung gemäß einem der Ansprüche 1 bis 5, **dadurch gekennzeichnet, dass** es sich der funktionellen Gruppe X² um eine ausgewählt aus der Gruppe von - OH, -SH, -COOH, -CSNH₂, -CN, -PO₃H₂, -SO₃H oder Salzen davon handelt.

7. Zubereitung gemäß einem der Ansprüche 1 bis 6, **dadurch gekennzeichnet dass** die Menge der Komponenten (D) 10 bis 50 Gew. % beträgt.

8. Zubereitung gemäß einem der Ansprüche 1 bis 7, **dadurch gekennzeichnet, dass** es sich um eine chromfreie Zubereitung handelt.

9. Zubereitung gemäß einem der Ansprüche 1 bis 8, **dadurch gekennzeichnet, dass** es sich bei dem Bindemittelsystem um mindestens eines ausgewählt aus der Gruppe von wässrigen oder überwiegend wässrigen Dispersionen von Polyacrylaten bzw. Styrol-Acrylat-Copolymeren (A1), Styrol-Alkadien-Polymeren (A2), Polyurethanen (A3) oder Alkydharzen (A4) handelt.

10. Zubereitung gemäß einem der Ansprüche 1 bis 8, **dadurch gekennzeichnet, dass** es sich bei dem Bindemittelsystem um eine wässrige oder überwiegend wässrige Dispersion von Polyacrylaten handelt.

11. Zubereitung gemäß einem der Ansprüche 1 bis 8, **dadurch gekennzeichnet, dass** es sich bei dem Bindemittelsystem um eine wässrige oder überwiegend wässrige Dispersion von Styrol-Acrylat-Copolymeren handelt.

12. Zubereitung gemäß einem der Ansprüche 1 bis 8, **dadurch gekennzeichnet, dass** es sich bei dem Bindemittelsystem um eine wässrige oder überwiegend wässrige Dispersion von Styrol-Butadien-Copolymeren handelt.

13. Verfahren zum Korrosionsschutz durch Aufbringen mindestens einer Korrosionsschutzschicht mit einer Dicke von mindestens 15 µm auf eine metallische Oberfläche, umfassend mindestens die folgenden Verfahrensschritte
(1) Aufbringen einer unter atmosphärischen Bedingungen härtbaren Zubereitung auf die blanke oder vorbeschichtete metallische Oberfläche, sowie
(2) Härten der aufgebrachten Schicht unter atmosphärischen Bedingungen
**dadurch gekennzeichnet, dass** man eine Zubereitung gemäß einem der Ansprüche 1 bis 11 einsetzt.

14. Verfahren gemäß Anspruch 13, **dadurch gekennzeichnet, dass** es sich bei der metallischen Oberfläche um die Oberfläche von Stahl, Zink oder Zinklegierungen, Aluminium oder Aluminiumlegierungen handelt.

15. Verfahren gemäß Anspruch 13 oder 14, **dadurch gekennzeichnet, dass** es sich um die Oberflächen von metallischen Bauwerken oder Metallkonstruktionen handelt.

16. Verfahren gemäß einem der Ansprüche 13 bis 15, **dadurch gekennzeichnet dass** die Schichtdicke der ausgehärteten Schicht mindestens 25 µm beträgt.

17. Verfahren gemäß einem der Ansprüche 13 bis 16, **dadurch gekennzeichnet, dass** die metallische Oberfläche vor dem Beschichten mit der Zubereitung in einem zusätzlichen Vorbereitungsschritt (0) gereinigt wird.

18. Verfahren gemäß einem der Ansprüche 13 bis 17, **dadurch gekennzeichnet, dass** es sich bei der Korrosionsschutzschicht um eine Grundierungsschicht (I) handelt, welche auf die blanke Metalloberfläche aufgebracht wird.

19. Verfahren gemäß Anspruch 18, **dadurch gekennzeichnet, dass** man die Grundierungsschicht (I) in weiteren Verfahrensschritten mit einer Zwischenbeschichtung (II) sowie einer Deckschicht (III) überlackiert.

20. Verfahren gemäß Anspruch 18, **dadurch gekennzeichnet, dass** es sich bei der Korrosionsschutzschicht um eine integrierte Grundierungsschicht (Ia) handelt, welche man in einem weiteren Verfahrensschritt direkt mit einer Deckschicht (III) überlackiert.

21. Verfahren gemäß Anspruch 18, **dadurch gekennzeichnet, dass** es sich bei der Korrosionsschutzschicht um eine integrierte Korrosionsschutzschicht (Ib) handelt, welche nicht mehr überlackiert wird.

22. Beschichtete metallische Oberfläche, erhältlich mittels eines Verfahrens gemäß einem der Ansprüche 13 bis 21.

23. Beschichtete metallische Oberfläche gemäß Anspruch 22, **dadurch gekennzeichnet, dass** es sich um die Oberfläche eines metallischen Bauwerkes oder einer Metallkonstruktion handelt.

24. Beschichtete metallische Oberfläche gemäß Anspruch 23, **dadurch gekennzeichnet, dass** es sich um die Oberfläche von Brücken, Strommasten, Tanks, Containern, chemischen Anlagen, Gebäuden, Dächern, Rohren, Kupplungen, Flanschen, Schiffen, Kränen, Pfählen oder Spundwänden handelt.

25. Beschichtete metallische Oberfläche gemäß einem der Ansprüche 22 bis 24, **dadurch gekennzeichnet, dass** die Oberfläche mindestens einer Korrosionsbelastung der Kategorie C2 gemäß DIN EN ISO 12944 ausgesetzt ist.

## Claims

1. A preparation for applying a corrosion control coat to a metallic surface, comprising at least the following components:
(A) 15% to 70% by weight of at least one binder system (A) curable under atmospheric conditions,
(B) 0.1% to 40% by weight of at least one polymeric corrosion preventative,
(C) 5% to 83.9% by weight of at least one solvent,
(D) 1% to 70% by weight of at least one component (D) selected from the group of finely divided fillers, pigments or dyes,
the amounts each being based on the total amount of all the components of the formulation,
wherein the corrosion preventative is at least one copolymer (B) synthesized from the following monomeric structural units:
(b1) 70 to 30 mol% of at least one monoethylenically unsaturated hydrocarbon (b1a) having 9 to 27 C atoms and/or of at least one monomer (b1b) selected from the group of monoethylenically unsaturated hydrocarbons (b1b'), modified with functional groups X¹, and vinyl ethers (b1b"),
(b2) 30 to 70 mol% of at least one monoethylenically unsaturated dicarboxylic acid having 4 to 8 C atoms and/or its anhydride (b2a) and/or derivatives (b2b) thereof,
the derivatives (b2b) being esters of the dicarboxylic acid with alcohols of the general formula HO-R¹-X²ₙ (I) and/or amides or imides with ammonia and/or amines of the general formula HR²N-R¹-X²ₙ (II), and the abbreviations having the following definition:
R¹: (n+1)-valent hydrocarbon group having 1 to 40 C atoms, in which nonadjacent C atoms may also be substituted by O and/or N,
R²: H, C₁ to C₁₀ hydrocarbon group or - (R¹-X²ₙ)
n: 1,2 or 3
X²: a functional group selected from the group of -Si(OR³)₃ (with R³ = C₁ to C₆ alkyl), -OR⁴, -SR⁴, -NR⁴₂, -COOR⁴, -(C=O)R⁴, -COCH₂COOR⁴, -CSNH₂, -CN, -PO₂R⁴₂, -PO₃R⁴₂, -OPO₃R⁴₂, (with R⁴ = H, C₁ to C₆ alkyl, aryl) or -SO₃H; and also
(b3) 0 to 10 mol% of other ethylenically unsaturated monomers, different from (b1) and (b2) but copolymerizable with (b1) and (b2),
the amounts each being based on the total amount of all the monomer units in the copolymer.

2. The preparation according to claim 1, wherein monomer (b2a) is maleic acid and/or maleic anhydride.

3. The preparation according to claim 1 or 2, wherein copolymer (B) comprises at least one monomer of the type (b1a).

4. The preparation according to any one of claims 1 to 3, wherein monomers (b1a) are monoethylenically unsaturated hydrocarbons having 12 to 24 C atoms.

5. The preparation according to any one of claims 1 to 4, wherein the copolymer further comprises 1 to 60 mol%, based on the amount of all monomers (b1), of at least one reactive polyisobutene.

6. The preparation according to any one of claims 1 to 5, wherein the functional group X² is one selected from the group of -OH, -SH, -COOH, -CSNH₂, -CN, -PO₃H₂, -SO₃H or salts thereof.

7. The preparation according to any one of claims 1 to 6, wherein the amount of components (D) is 10% to 50% by weight.

8. The preparation according to any one of claims 1 to 7, being a chromium-free preparation.

9. The preparation according to any one of claims 1 to 8, wherein the binder system is at least one selected from the group of aqueous or predominantly aqueous dispersions of polyacrylates and styrene-acrylate copolymers (A1), styrene-alkadiene polymers (A2), polyurethanes (A3) or alkyd resins (A4).

10. The preparation according to any one of claims 1 to 8, wherein the binder system is an aqueous or predominantly aqueous dispersion of polyacrylates.

11. The preparation according to any one of claims 1 to 8, wherein the binder system is an aqueous or predominantly aqueous dispersion of styrene-acrylate copolymers.

12. The preparation according to any one of claims 1 to 8, wherein the binder system is an aqueous or predominantly aqueous dispersion of styrenebutadiene copolymers.

13. A method of corrosion control through application of at least one corrosion control coat having a thickness of at least 15 □m to a metallic surface, comprising at least the following steps:
(1) applying a preparation curable under atmospheric conditions to the bright or precoated metallic surface, and
(2) curing the applied coat under atmospheric conditions,
which comprises using a preparation according to any one of claims 1 to 11.

14. The method according to claim 13, wherein the metallic surface is the surface of steel, zinc or zinc alloys, aluminum or aluminum alloys.

15. The method according to claim 13 or 14, wherein the surface is that of metallic structures or of metal constructions.

16. The method according to any one of claims 13 to 15, wherein the thickness of the cured coat is at least 25 µm.

17. The method according to any one of claims 13 to 16, wherein the metallic surface prior to coating with the preparation is cleaned in an additional preparation step (0).

18. The method according to any one of claims 13 to 17, wherein the corrosion control coat is a priming coat (I) which is applied to the bright metal surface.

19. The method according to claim 18, wherein the priming coat (I) is overcoated in further steps with an intermediate coating (II) and also with a topcoat (III).

20. The method according to claim 18, wherein the corrosion control coat is an integrated priming coat (Ia) which is overcoated in a further step directly with a topcoat (III).

21. The method according to claim 18, wherein the corrosion control coat is an integrated corrosion control coat (Ib) which is not overcoated any more.

22. A coated metallic surface obtainable by means of a method according to any one of claims 13 to 21.

23. The coated metallic surface according to claim 22, which is the surface of a metallic structure or of a metal construction.

24. The coated metallic surface according to claim 23, which is the surface of bridges, power masts, tanks, containers, chemical plants, buildings, roofs, pipes, couplings, flanges, ships, cranes, posts or bulkheads.

25. The coated metallic surface according to any one of claims 22 to 24, which is exposed at least to category C2 corrosion in accordance with DIN EN ISO 12944.

## Revendications

1. Préparation pour l'application de couches de protection contre la corrosion sur des surfaces métalliques, comprenant au moins les composants suivantes :
(A) de 15 à 70 % en poids d' au moins un système de liant (A) durcissable dans les conditions atmosphériques,
(B) de 0,1 à 40 % en poids d'au moins un agent polymère de protection contre la corrosion,
(C) de 5 à 83,9 % en poids d'au moins un solvant,
(D) de 1 à 70 % en poids d'au moins un composant (D) choisi dans le groupe formé par des matières de remplissage, des pigments ou des colorants finement divisés,
où les quantités sont à chaque fois indiquées par rapport à la quantité totale de tous les composants de la formulation,
**caractérisée en ce que** l'agent de protection contre la corrosion est au moins un copolymère (B) constitué des unités constitutives monomères suivantes :
(b1) de 70 à 30 % molaires d'au moins un hydrocarbure monoéthyléniquement insaturé (b1a) comportant de 9 à 27 atomes de carbone et/ou d'au moins un monomère (b1b) choisi dans le groupe d'hydrocarbures monoéthyléniquement insaturés modifiés par des groupes fonctionnels X¹ (b1b') et d'éthers vinyliques (b1b"),
(b2) de 30 à 70 % molaires d'au moins un acide dicarboxylique monoéthyléniquement insaturé comportant de 4 à 8 atomes de carbone et/ou de son anhydride (b2a) et/ou de leurs dérivés (b2b),
où les dérivés (b2b) sont des esters des acides dicarboxyliques avec des alcools de la formule générale HO-R¹-X²ₙ (I) et/ou des amides
ou des imides avec de l'ammoniac et/ou des amines de la formule générale HR²N-R¹-X²ₙ (II), et les abréviations ont la signification suivants :
R¹ : groupe hydrocarboné de valence (n + 1) comportant de 1 à 40 atomes de carbone, où des atomes de carbone non voisins peuvent être substitués par 0 et/ou N,
R² : H, groupe hydrocarboné en C₁ à C₁₀ ou - (R¹-X²ₙ),
n : 1, 2 ou 3,
X² : un groupe fonctionnel choisi dans le groupe formé par -Si(OR³)₃ (avec R³ = alkyle en C₁ à C₆), -OR⁴, -SR⁴, -NR⁴₂, -COOR⁴, -(C=O)R⁴, -COCH₂COOR⁴, -CSNH₂, -CN, -PO₂R⁴₂, -PO₃R⁴₂, -OPO₃R⁴₂, (avec R⁴ = H, alkyle en C₁ à C₆, aryle) ou -SO₃H, et
(b3) de 0 à 10 % molaires d'autres monomères éthyléniquement insaturés, différents de (b1) et (b2), mais copolymérisables avec (b1) et (b2),
où les quantités sont à chaque fois indiquées par rapport à la quantité totale de toutes les unités monomères dans le copolymère.

2. Préparation suivant la revendication 1, **caractérisée en ce que** le monomère (b2a) est de l'acide maléique et/ou de l'anhydride d'acide maléique.

3. Préparation suivant la revendication 1 ou 2, **caractérisée en ce que** le copolymère (B) contient au moins un monomère du type (b1a).

4. Préparation suivant l'une quelconque des revendications 1 à 3, **caractérisée en ce que** les monomères (b1a) sont des hydrocarbures monoéthyléniquement insaturés comportant de 12 à 24 atomes de carbone.

5. Préparation suivant l'une quelconque des revendications 1 à 4, **caractérisée en ce que** le copolymère comprend en outre de 1 à 60 % molaires, par rapport à la quantité de tous les monomères (b1), d'au moins un polyisobutène réactif.

6. Préparation suivant l'une quelconque des revendications 1 à 5, **caractérisée en ce que** le groupe fonctionnel X² est choisi dans le groupe formé par -OH, -SH, -COOH, -CSNH₂, -CN, -PO₃H₂, -SO₃H ou leurs sels.

7. Préparation suivant l'une quelconque des revendications 1 à 6, **caractérisée en ce que** la quantité des composants (D) est de 10 à 50 % en poids.

8. Préparation suivant l'une quelconque des revendications 1 à 7, **caractérisée en ce qu'**il s'agit d'une préparation exempte de chrome.

9. Préparation suivant l'une quelconque des revendications 1 à 8, **caractérisée en ce que** le système de liant est au moins un système choisi dans le groupe formé par des dispersions aqueuses ou principalement aqueuses de polyacrylates ou de copolymères de styrène-acrylate (A1), de polymères de styrène-alcadiène (A2), de polyuréthannes (A3) ou de résines alkydes (A4).

10. Préparation suivant l'une quelconque des revendications 1 à 8, **caractérisée en ce que** le système de liant est une dispersion aqueuse ou principalement aqueuse de polyacrylates.

11. Préparation suivant l'une quelconque des revendications 1 à 8, **caractérisée en ce que** le système de liant est une dispersion aqueuse ou principalement aqueuse de copolymères de styrène-acrylate.

12. Préparation suivant l'une quelconque des revendications 1 à 8, **caractérisée en ce que** le système de liant est une dispersion aqueuse ou principalement aqueuse de copolymères de styrène-butadiène.

13. Procédé de protection contre la corrosion par application d'au moins une couche de protection contre la corrosion d'une épaisseur d'au moins 15 µm sur une surface métallique, et comprenant au moins les étapes de procédé suivantes :
(1) Application d'une préparation durcissable dans des conditions atmosphériques sur la surface métallique nue ou pré-enduite, et
(2) Durcissement de la couche appliquée dans des conditions atmosphériques,
**caractérisé en ce que** l'on met en oeuvre une préparation suivant l'une quelconque des revendications 1 à 11.

14. Procédé suivant la revendication 13, **caractérisé en ce que** la surface métallique est une surface d'acier, de zinc ou d'alliages de zinc, d'aluminium ou d'alliages d'aluminium.

15. Procédé suivant la revendication 13 ou 14, **caractérisé en ce que** les surfaces sont des surfaces de structures métalliques ou de constructions en métal.

16. Procédé suivant l'une quelconque des revendications 13 à 15, **caractérisé en ce que** l'épaisseur de couche de la couche durcie est d'au moins 25 µm.

17. Procédé suivant l'une quelconque des revendications 13 à 16, **caractérisé en ce que** la surface métallique est, avant l'enduction avec la préparation, nettoyée dans une étape additionnelle de préparation.

18. Procédé suivant l'une quelconque des revendications 13 à 17, **caractérisé en ce que** la couche de protection contre la corrosion est une couche de primaire (I), qui est appliquée sur la surface nue du métal.

19. Procédé suivant la revendication 18, **caractérisé en ce que** la couche de primaire (I) est recouverte, dans d'autres étapes du procédé, d'une couche intermédiaire (II) et d'une couche de finition (III).

20. Procédé suivant la revendication 18, **caractérisé en ce que** la couche de protection contre la corrosion est une couche de primaire intégrée (Ia), qui est directement recouverte, dans une autre étape du procédé, d'une couche de finition (III).

21. Procédé suivant la revendication 18, **caractérisé en ce que** la couche de protection contre la corrosion est une couche de protection contre la corrosion intégrée (Ib), qui n'est plus recouverte.

22. Surface métallique revêtue, que l'on peut obtenir par un procédé suivant l'une quelconque des revendications 13 à 21.

23. Surface métallique revêtue suivant la revendication 22, **caractérisée en ce que** la surface est une surface d'une structure métallique ou d'une construction en métal.

24. Surface métallique revêtue suivant la revendication 23, **caractérisée en ce qu'**il s'agit des surfaces de ponts, de pylônes électriques, de réservoirs, de conteneurs, d'installations chimiques, de bâtiments, de toitures, de tuyaux, de raccords, de brides, de bateaux, de grues, de poteaux ou de rideaux de palplanches.

25. Surface métallique revêtue suivant l'une quelconque des revendications 22 à 24, **caractérisée en ce que** la surface est exposée à au moins une charge de corrosion de la catégorie C2 selon DIN EN ISO 12944.
